# EUROPEAN PATENT SPECIFICATION

(11) **EP 2 397 531 B1**
(45) Date of publication and mention of the grant of the patent: **31.10.2012**
(21) Application number: 11169944.3
(22) Date of filing: 15.06.2011
(51) Int. Cl.: C09J 133/00, C08F 2/24

(54) **Heat-sensitive adhesive material**
Wärmeempfindliches Klebematerial
Matériau adhésif sensible à la chaleur

(30) Priority: 17.06.2010 JP 2010138508
(43) Date of publication of application: 21.12.2011
(73) Proprietor: Ricoh Company, Ltd., Tokyo 143-8555 (JP)
(72) Inventor: Yamaguchi, Takehito, Ohta-ku,Tokyo (JP); Shimbo, Hitoshi, Ohta-ku, Tokyo (JP); Kugo, Tomoyuki, Ohta-ku, Tokyo (JP)
(74) Representative: Lamb, Martin John Carstairs

(56) References cited:
- EP-A1- 0 989 162

## Description

### BACKGROUND OF THE INVENTION

### Field of the Invention

The present invention relates to a water-dispersible heat-sensitive adhesive material which is non-adhesive at room temperature, however, can exhibit surface tackiness and maintain the surface tackiness even after the surface tackiness is exhibited, and has sufficient surface tackiness particularly against rough-surfaced adherends such as corrugated cardboards.

### Description of the Related Art

In recent years, label adhesive materials are increasingly used for price labels, product (bar code) labels, quality labels, ingredient labels, and advertisement labels (stickers). As for label recording methods, there are various methods such as inkjet recording methods, heat-sensitive recording methods, and pressure-sensitive recording methods.

Conventionally, typical adhesive sheets having a structure in which a tacky layer and a release paper are laminated on an opposite surface of the label to a surface thereof on which information is to be recorded are widely used, because the release paper can be peeled off from the label in lamination, and the label can be easily affixed to an adherend by only pressure. An adhesive sheet having a typical structure is used after a release paper is peeled off therefrom, however, it is difficult to collect and recycle the peeled release paper, and in most cases, the peeled release paper discarded subsequently. In addition, since a so-called adhesive layer is re-affixed, when an attempt is made to peel off an adhesive sheet, the adhesive sheet would curl and/or would be wrinkled, and at the worst, there has been a problem that the adhesive sheet is ruptured.

Recently, heat-sensitive adhesive sheets which do not exhibit surface tackiness at room temperature and require no release paper have been a focus of attention.

Heat-sensitive adhesives contain a solid plasticizer and a thermoplastic resin as essential components. A heat-sensitive adhesive material can be obtained by mixing a tackifier or the like with such a heat-sensitive adhesive and applying the mixture to an opposite surface of a support to a surface thereof on which printing is performed. The surface of the adhesive layer in such a heat-sensitive adhesive material does not exhibit surface tackiness at all at room temperature, however, exhibit surface tackiness when heated, and maintains surface tackiness for a while even after a heat source is removed from the heat-sensitive sheet. This can be considered that at first, the solid plasticizer is melted by heating, then the thermoplastic resin and the tackifier are melted and thereby the heat-sensitive sheet exhibits surface tackiness.

As recoating labels which require no release paper are produced by another method, those using a heat-sensitive adhesive layer are disclosed in Japanese Patent Application Laid-Open (JP-A) No. 63-303387 and Japanese Utility Model Application Publication (JP-Y) No. 05-11573. These recording labels each using a heat-sensitive adhesive layer require heat activation of a heat-sensitive adhesive layer. As methods of activating the heat-sensitive adhesive layer, there have been disclosed, a method using hot air and infrared rays in JP-Y No. 05-11573, a method using an electric heater and a dielectric coil in Japanese Patent Application Laid-Open (JP-A) No. 05-127598, a method of using a xenon flash in Japanese Patent Application Laid-Open (JP-A) No. 07-121108; and a method of using a halogen lamp in Japanese Patent Application Laid-Open (JP-A) No. 07-164750.

Further, there has also been known a method in which a heat transfer medium heated by a heating unit or heat blocking is brought into contact with a heat-sensitive adhesive layer to thereby thermally activate the heat-sensitive adhesive layer. For example, Japanese Patent Application Laid-Open (JP-A) No. 57-37534 discloses a method of contacting a belt, which is a heat transfer medium heated by a heater serving as a heating unit, to a heat-sensitive adhesive layer, Japanese Patent Application Laid-Open (JP-A) No. 60-45132 discloses a method of contacting a heat roll serving as a heating unit to a heat-sensitive adhesive layer, and Japanese Patent Application Laid-Open (JP-A) No. 06-263128 discloses a method of contacting a heat roll serving a heating unit to a heat-sensitive adhesive layer.

When a heat-sensitive adhesive layer is thermally activated using a heat transfer heater or a halogen lamp, it is difficult to efficiently apply heat to the heat-sensitive adhesive layer, the safety to an excessively heated condition of the heat-sensitive adhesive layer decreases. In addition, heat energy is not efficiently used, and thus this causes expensive energy costs. It can be considered that the heated region is masked with a cover in view of the safety and costs, however, a problem still remains in that this impairs the compactness of the entire body of the apparatus.

When a heat-sensitive adhesive layer is thermally activated by contacting a heating unit such as a heating drum and a heat roll, or a heat transfer heater such as a belt heated by a heating unit, the heat-sensitive adhesive material must be held on standby in a state where heat is applied to the heating unit in a quest to rapidly thermally activate the heat-sensitive adhesive material, and thus the method has a problem with safety. In addition, the heat-sensitive adhesive layer may be transferred to the heating unit or heat transfer heater when it is thermally activated, and such a transfer of the heat-sensitive adhesive layer may cause the recording label be wound on the heating unit.

In the above-mentioned thermal activation method, when the recording label has a heat-sensitive color-forming layer, the heat-sensitive color-forming layer easily develops a color under the influence of heat generated in the thermal activation, and thus it is disadvantageous in terms of heat sensitivity because the heat resistance of the heat-sensitive color-forming layer should be improved.

Note that Japanese Patent Application Laid-Open (JP-A) No. 07-258613 discloses a method in which a heating unit is pressed against a recording label from the base side to thereby thermally activate a heat-sensitive adhesive layer. According to this method, it is possible to prevent the transfer of a heat-sensitive adhesive layer to a heating unit and the winding of a recording label on a heating unit. However, since the heat energy that is wasted without being used during the thermal activation of the heat-sensitive adhesive layer increases and the thermal activation of the heat-sensitive adhesive layer is not rapidly performed, the operation efficiency of thermal activation of the heat-sensitive adhesive layer and lamination of the recording label performed after the thermal activation decreases.

Printers are desired to achieve the safety, energy saving and compactness of apparatus, and to respond to the desire, Japanese Patent Application Laid-Open (JP-A) Nos. 11-79152, 10-35126, 11-157141, 11-311945, 2001-48139, 2003-316265, and 11-65451 respectively disclose a thermal activation unit using a thermal head as a thermal activation method. By using a thermal head as a thermal activation method of a heat-sensitive adhesive material, the energy consumption amount during thermal activation has been reduced, and the safety and compactness of printing apparatus have been more improved than ever before.

However, it is intended to improve the adhesive strength of a thermally activated heat-sensitive adhesive material because of recent market demands for an improvement in the adhesive strength. In response to this, a label which has strong adhesive strength to rough-surfaced adherends such as corrugated cardboards is desired particularly for the purpose of physical distribution such as home-delivery services.

As a delayed tack glue excellent in adhesion properties to corrugated cardboards, there have been proposed those using a phosphoric acid based compound for a solid plasticizer in Japanese Patent Application Laid-Open (JP-A) Nos. 2006-257163, 2006-257320, and 2007-77288, and those using a benzotriazole-based compound therefor in Japanese Patent Application Laid-Open (JP-A) No. 2009-13382.

As a method of further improving the adhesive strength, there have been proposed heat-sensitive adhesive materials each having an adhesive under layer, a hollow intermediate layer and a heat-sensitive adhesive layer over a support, in Japanese Patent Application Laid-Open (JP-A) Nos. 2006-83196, and 2009-144142.

However, these proposals have problems that when an attempt is made to increase the adhesive strength of a heat-sensitive adhesive material, in low temperature environments, to corrugated cardboard, blocking occurs in storage place at 60°C and when an attempt is made to improve the blocking resistance thereof in storage place at 60°C, the adhesive strength thereof decreases in low temperature environments.

For the purpose of improving the blocking resistance of a heat-sensitive adhesive material, the present inventors proposed to remove low-molecular weight components in a tackifier (in Japanese Patent Application Laid-Open (JP-A) No. 2009-275101) and a method of using a high-molecular weight emulsifier in production of a tackifier emulsion (in Japanese Patent Application Laid-Open (JP-A) No. 2010-059389).

However, these proposals cannot be said sufficient, and further improvements are desired.

In addition, when a heat-sensitive adhesive is applied onto a base, in most cases, the heat-sensitive adhesive is used as a water-dispersible adhesive, and thus the heat-sensitive adhesive is used after components incorporated thereinto are made into an aqueous dispersion such as an aqueous suspension or an emulsion.

Conventionally, to obtain an aqueous dispersion of a thermoplastic resin and/or a tackier, an emulsion polymerization method is used, and to stabilize the dispersion liquid, various surfactants have been used alone or in the form of a mixture as an emulsifier for polymerization. Typical surfactants encompass anionic surfactants such as an alkyl sulfate, alkylbenzene sulfate, polyoxyethylene alkylether sulfate, alkyl-sulfosuccinate, and ether sulfonate; nonionic surfactants such as nonylphenol, alkyl phenol, alkylamine, polyoxyethylene alkylphenyl ether, and polyoxyethylene fatty acid ester; and cationic surfactants such as quaternary ammonium salts.

However, when a heat-sensitive adhesive containing a tackifier resin and/or a thermoplastic resin which are emulsion-polymerized using these surfactants is used as a label, problems with blocking, a reduction in adhesion properties, printer conveyance and the like frequently occur.

It is considered that these problems occur because of the surfactant present in a free state.

Meanwhile, the thermal activation methods using a thermal head have various problems. Particularly, JP-A No. 2003-316265 has a mechanism in which, the heat-sensitive adhesive material is cut after a surface of the heat-sensitive recording layer is printed and the heat-sensitive adhesive layer, which is provided on the rear surface of the heat-sensitive adhesive material, is thermally activated and then ejected. However, immediately after the heat-sensitive adhesive layer is thermally activated and the heat-sensitive adhesive material is ejected, a heat resistor section in a thermal head and a platen roll for conveying the base is temporarily contact with each other. Then, part of glue residues in the heat-sensitive adhesive layer that has been tackified by heating through the thermal head is attached to and deposited on the thermal head, and the glue residues begin to be transferred to the platen roll when the thermal head is in contact with the platen roll. After a while, a large amount of glue begin to be deposited on the platen roll, and there is a persistent problem that when the deposition proceeds excessively, the surface of the heat-sensitive recording layer comes into contact with the glue attached to the platen roll, and the heat-sensitive adhesive material is wound on the platen roll to cause paper jamming. Thus, a heat-sensitive adhesive material which is satisfactorily usable by users has not yet been provided.

Particularly under high-temperature and high-humidity (30°C to 40°C and 70% RH to 80% RH) environments, the above-mentioned phenomenon worsens, and thus the heat-sensitive adhesive materials disclosed in JP-A Nos. 2006-257163, 2006-257320, 2007-77288, 2009-13382, 2006-83196, 2009-144142, 2009-275101, and 2010-059389 still have problems with printer conveyance under high-temperature and high-humidity environments.

Meanwhile, a heat-sensitive adhesive sheet has been proposed in an attempt to improve the water resistance and the adhesion properties thereof (Japanese Patent Application Laid-Open (JP-A) No. 07-278521). The heat-sensitive adhesive sheet according to the proposal contains a solid plasticizer, a thermoplastic resin and a tackifier, wherein the solid plasticizer is a phthalic acid-based compound, the thermoplastic resin is obtained by emulsion polymerization using a reactive emulsifier and has a Tg of -5°C or higher. This heat-sensitive adhesive sheet is excellent in adhesive strength to stainless steal plates, PVC wraps and the like and in water resistance when it is dipped in water after lamination, however, with this composition, the adhesive strength to corrugated cardboards is insufficient, and the problem with blocking at 60°C still remains. In addition, this proposal does not describe printer conveyance in thermal activation.

Accordingly, a heat-sensitive adhesive material which simultaneously satisfies an improvement in tackiness to rough-surfaced adherends such as corrugated cardboards and an improvement in blocking when a thermal head is activated, and is excellent in printer conveyance under high-temperature and high-humidity environments has not yet proposed so far, and the developments thereof are strongly demanded.

### BRIEF SUMMARY OF THE INVENTION

The present invention aims to solve the above-mentioned various conventional problems and achieve the following object. That is, an object of the present invention is to provide a heat-sensitive adhesive material which simultaneously satisfies an improvement in tackiness to rough-surfaced adherends such as corrugated cardboards and an improvement in blocking when a thermal head is activated, and is excellent in printer conveyance under high-temperature and high-humidity environments.

Means for solving the above-mentioned problems are as follows:
< 1 > A heat-sensitive adhesive material including:
   a support, and
   a heat-sensitive adhesive layer on the support, the heat-sensitive adhesive layer includes a water-dispersible heat-sensitive adhesive containing at least a thermoplastic resin, a solid plasticizer and a tackifier,
   wherein the thermoplastic resin is obtained by emulsion polymerization using a reactive surfactant and has a glass transition temperature (Tg) of lower than -20°C.
< 2 > The heat-sensitive adhesive material according to < 1 >,
   wherein the thermoplastic resin is an acryl-based resin.
< 3 > The heat-sensitive adhesive material according to one of < 1 > and < 2 >, wherein the tackifier is obtained by being emulsified in the presence of a high-molecular weight emulsifier.
< 4 > The heat-sensitive adhesive material according to any one of < 1 > to < 3 >, wherein the solid plasticizer is a compound represented by any one of General Formula (1), Structural Formulae (2) and (3) below: 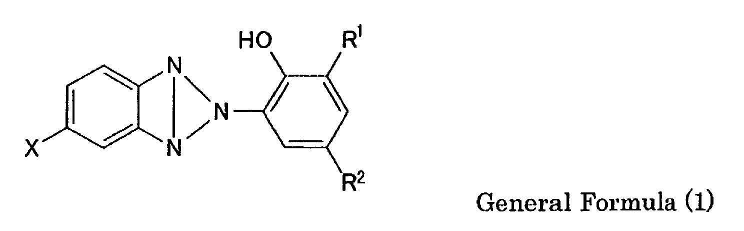 where R¹ and R² may be identical to or different from each other, and each represent any one of a hydrogen atom, an alkyl group, and α,α-dimethylbenzyl group; and X represents a hydrogen atom or a halogen atom. 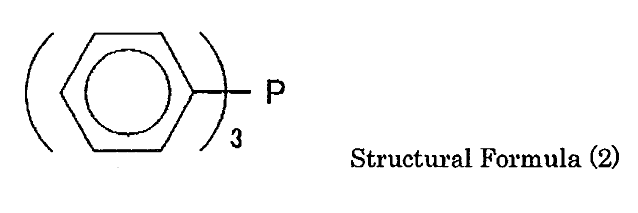 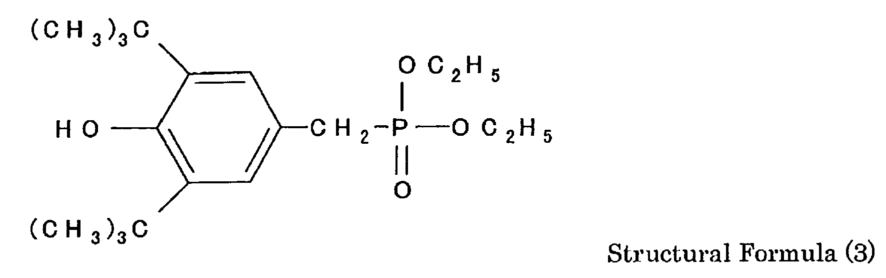
< 5 > The heat-sensitive adhesive material according to any one of < 1 > to < 4 >, further including an under layer between the heat-sensitive adhesive layer and the support.
< 6 > The heat-sensitive adhesive material according to < 5 >, wherein the under layer is a hollow under layer formed of a thermoplastic resin which is obtained by emulsion polymerization using hollow particles and a reactive surfactant.
< 7 > The heat-sensitive adhesive material according to < 5 >, wherein the under layer comprises an adhesive under layer formed of a thermoplastic resin which is obtained by emulsion polymerization using a reactive surfactant, and a hollow under layer formed of a thermoplastic resin which is obtained by emulsion polymerization using hollow particles and a reactive surfactant.
< 8 > The heat-sensitive adhesive material according to < 5 >, wherein the under layer comprises an adhesive under layer formed of the thermoplastic resin which is obtained by emulsion polymerization using a reactive surfactant and a tackifier, and a hollow under layer formed of a thermoplastic resin which is obtained by emulsion polymerization using hollow particles and a reactive surfactant.
< 9 > The heat-sensitive adhesive material according to any one of < 1 > to < 8 >, wherein the heat-sensitive adhesive material exhibits surface tackiness by heating with a line-type thermal head.
< 10 > The heat-sensitive adhesive material according to any one of < 1 > to < 9 >, further including a recording layer on an opposite surface of the support to a surface thereof provided with the heat-sensitive adhesive layer.

The present invention can solve the above-mentioned various conventional problems and achieve the object. That is, the present invention can provide a heat-sensitive adhesive material which simultaneously satisfies an improvement in tackiness to rough-surfaced adherends such as corrugated cardboards and an improvement in blocking when a thermal head is activated, and is excellent in printer conveyance under high-temperature and high-humidity environments.

### DETAILED DESCRIPTION OF THE INVENTION

### (Heat-Sensitive Adhesive Material)

A heat-sensitive adhesive material according to the present invention includes at least a support and a heat-sensitive adhesive layer and when necessary, includes other members such as an under layer and a recording layer.

### < Heat-Sensitive Adhesive Layer >

The heat-sensitive adhesive layer is made of a water-dispersible heat-sensitive adhesive.

The heat-sensitive adhesive layer is formed on the support.

### - Water-Dispersible Heat-Sensitive Adhesive -

The water-dispersible heat-sensitive adhesive contains at least a thermoplastic resin, a solid plasticizer and a tackifier, and when necessary, contains other components.

### -- Thermoplastic Resin --

The glass transition temperature of the thermoplastic resin is not particularly limited, as long as it is lower than -20°C, and may be suitably selected in accordance with the intended use. The glass transition temperature is, however, preferably -85°C or higher but lower than -20°C, more preferably -70°C to -20°C, and particularly preferably -65°C to -50°C. When the glass transition temperature is -20°C or higher, the adhesive strength to a rough surface such as a surface of a corrugated cardboard may decrease. Meanwhile, when the glass transition temperature of the thermoplastic resin is within the particularly preferable range, it is advantageous in that the adhesive strength to corrugated cardboards is increased, and roll blocking can be prevented when the resulting heat-sensitive adhesive material is stored under high-temperature environments.

The thermoplastic resin is not particularly limited and may be suitably selected in accordance with the intended use.

As for types of the thermoplastic resin, for example, there may be exemplified (meth)acrylic acid ester copolymers, styrene-isoprene copolymers, styrene-acrylic acid ester copolymers, styrene-butadiene copolymers, acrylonitrile-butadiene copolymers, ethylene-vinyl acetate copolymers, vinyl acetate-acrylic acid ester copolymers, ethylene-vinyl chloride copolymers, ethylene-acrylic acid ester copolymers, vinyl acetate-ethylene-vinyl chloride copolymers, vinyl acetate-ethylene-acrylic acid ester copolymers, vinyl acetate-ethylene-styrene copolymers, and resins such as polybutadiene, and polyurethane. Among these, from the viewpoints of adhesiveness and weatherability, it is preferable to use various copolymers containing acrylic acid ester as a monomer component.

These thermoplastic resins may be used alone or in combination. The thermoplastic resin can be obtained by emulsion polymerization using a reactive surfactant.

The reactive surfactant has a double bond in its molecule, unlike general surfactants, and thus it is easily incorporated into micelles during polymerization and is easily copolymerized with a polymerization monomer to be incorporated into a polymer chain. As a result, the activator present in a free state is reduced to a small amount or runs out, and thus problems such as a reduction in water resistance and the storage stability defect hardly occur. By using a thermoplastic resin obtained by emulsification polymerization using such a reactive surfactant, it is possible to obtain a heat-sensitive adhesive excellent in printer conveyance.

The reactive emulsifier means, for example, a surfactant having a hydrophilic group and a hydrophobic group and having a carbon-carbon double bond in its molecule.

The carbon-carbon double bond is not particularly limited and may be suitably selected in accordance with the intended use. Examples thereof include functional groups such as (meth)allyl group, 1-propenyl group, 2-methyl-1- propenyl group, vinyl group, isopropenyl group, and (meth)acryloyl group,

The reactive emulsifier is not particularly limited and may be suitably selected in accordance with the intended use. Examples thereof include polyoxyethylene alkyl ether containing at least one of the functional groups in its molecule, a sulfosuccinic ester salt of the polyoxyethylene alkyl ether containing at least one of the functional groups in its molecule, a sulfuric acid ester salt of the polyoxyethylene alkyl ether containing at least one of the functional groups in its molecule, polyoxyethylene phenyl ether containing at least one of the functional groups in its molecule, a sulfosuccinic ester salt of the polyoxyethylene phenyl ether containing at least one of the functional groups in its molecule, a sulfuric acid ester salt of the polyoxyethylene phenyl ether containing at least one of the functional groups in its molecule, polyoxyethylene alkyl phenyl ether containing at least one of the functional groups in its molecule, a sulfosuccinic ester salt of the polyoxyethylene alkyl phenyl ether containing at least one of the functional groups in its molecule, a sulfuric acid ester salt of the polyoxyethylene alkyl phenyl ether containing at least one of the functional groups in its molecule, polyoxyethylene aralkyl phenyl ether containing at least one of the functional groups in its molecule, a sulfosuccinic ester salt of the polyoxyethylene aralkyl phenyl ether containing at least one of the functional groups in its molecule, a sulfuric acid ester salt of the polyoxyethylene aralkyl phenyl ether containing at least one of the functional groups in its molecule, a phosphoric acid ester salt of the polyoxyethylene aralkyl phenyl ether containing at least one of the functional groups in its molecule, an aliphatic or aromatic carboxylic acid salt of the polyoxyethylene alkylphenyl ether containing at least one of the functional groups in its molecule, an acidic phosphoric acid(meth)acrylic acid ester-based emulsifier, an acidic anhydride-modified product of rosin glycidyl ester acrylate (see Japanese Patent Application Laid-Open (JP-A) No. 04-256429), and various emulsifiers described in Japanese Patent Application Laid-Open (JP-A) Nos. 63-23725, 63-240931, and 62-104802).

In addition, compounds blocked copolymers or random copolymers which are obtained by block copolymerization or random copolymerization of polyoxyethylene in the reactive emulsifier with polyoxypropylene or polyoxyethylene and polyoxypropylene.

Typical examples of commercially available products thereof include "KAYAMER PM-1", "KAYAMER PM-2"and "KAYAMER PM-21" (trade name of products, produced by Nippon Kayaku Co., Ltd.), "SE-10N", "NE-10", "NE-20", "NE-30", "ADEKASOAP SR-10", "ADEKASOAP SR-20" and "ADEKASOAP ER-20" (trade name of products, produced by ASAHI DENKAK.K.), "NEWFRONTIERA229E", "NEWFRONTIER N117E", "NEWFRONTIER N250Z", "AQUARON RN-10", "AQUARON RN-20", "AQUARON RN-50", "AQUARON HS-10", "AQUARON KH-05" and "AQUARON KH-10" (trade name of products, produced by DAI-ICHI KOGYO SEIYAKU CO., LTD.), "EMINOL JS-2" (trade name of product, produced by Sanyo Chemical Industries, Ltd.), and "RATEMURU K-180" (trade name of product, produced by Kao Corporation).

As the reactive emulsifier, polyoxyethylene phenyl ether-based reactive emulsifiers are preferable from the viewpoints of polymerizability, and emulsifiability of thermoplastic resins, and it is particularly preferable to use an unsaturated sulfonic acid salt having a structure in which an alkylene oxide chain is polymerized in an amount of 5 mol to 20 mol.

Preferred examples of commercially available products such unsaturated sulfonic acid salt include "ADEKASOAP SR-10" and "ADEKASOAP SR-20" (trade name of products, produced by ASAHI DENKA K.K.), AQUARON KH-05 and "AQUARON KH-10"(trade name of products, produced by DAI-ICHI KOGYO SEIYAKU CO., LTD.).

The reactive emulsifier for use in the present invention is not limited to those described above.

In emulsion polymerization of the thermoplastic resin, these reactive surfactants may be used alone or in combination.

### -- Solid Plasticizer --

The solid plasticizer is not particularly limited and may be suitably selected in accordance with the intended use. However, a solid plasticizer which is solid at room temperature but melted when heated is preferable.

The melting point of the solid plasticizer is not particularly limited and may be suitably selected in accordance with the intended use. It is, however, preferably 80°C or higher, and the maximum limit value is about 200°C. When the melting point of the solid plasticizer is lower than 80°C, defects during storage (blocking) occur, for example, when a resultant heat-sensitive adhesive is produced using such a solid plasticizer, an adhesive strength is exhibited under environments of usual storage temperatures. In addition, production defects may also occur, for example, when the heat-sensitive adhesive layer coating liquid is applied to a base and then heated, the adhesive strength is exhibited. When the melting point is higher than 200°C, a large amount of energy is required to make the adhesive strength exhibited, and practical problems occur. In addition, when a resulting heat-sensitive recording paper is used as a base and the adhesive strength thereof exhibited with a large amount of energy, there is a problem that a print image cannot be read because the heat-sensitive recording layer develops a color.

The solid plasticizer is not particularly limited and may be suitably selected in accordance with the intended use. Examples of the solid plasticizer include a benzotriazole compound represented by General Formula (1) below, a triphenyl phosphine compound represented by Structural Formula (2) below, a compound represented by Structural Formula (3) below, a hydroxy benzoic acid ester compound represented by General Formula (4) below, and compounds represented by any one of General Formulae (5) to (8) below and General Formulae (9) and (10) above.

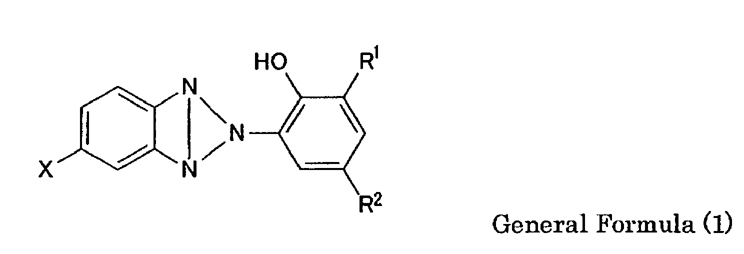

In General Formula (1), R¹ and R² may be identical to or different from each other, and each represent any one of a hydrogen atom, an alkyl group, and α,α-dimethylbenzyl group; and X represents a hydrogen atom or a halogen atom.

The alkyl group in General Formula (1) is not particularly limited and may be suitably selected in accordance with the intended use. Alkyl groups having 1 to 8 carbon atoms are preferable. Examples of such alkyl groups include methyl group, ethyl group, n-propyl group, n-butyl group, n-pentyl group, n-hexyl group, and n-heptyl group. These groups may be further substituted by a substituent.

The substituent is not particularly limited and may be suitably selected in accordance with the intended use. Examples of the substituent include hydroxyl group, halogen atom, nitro group, carboxyl group, cyano group; and alkyl group, aryl group, and heterocyclic group which may have a specific substituent (e.g., carboxyl group, and nitro group).

The halogen atom is not particularly limited and may be suitably selected in accordance with the intended use. For example, there may be exemplified a fluorine atom, a chlorine atom, a bromine atom, and an iodine atom.

Examples of the benzotriazole compound represented by General Formula (1) include 2-(2'-hydroxy-5'-methylphenyl)benzotriazole, 2-(2'-hydroxy -5'-t-octylphenyl)benzotriazole, 2-(2'-hydroxy -3'-t-butyl-5'-methylphonyl)-5-chlorobenzotriazole, 2-(2'-hydroxy-3',5'-di-t-aminophenyl)benzotriazole, 2-(2'-hydroxy-3',5'-t-butylphenyl)-5-chorobenzotriazole, 2-[2'-hydroxy-3',5'-di(1,1-dimethylbenzyl)phenyl]benzotriazole, 2-(2'-hydroxy-3',5'-di-t-butylphenyl)benzotriazole, and 2-(2'-hydroxy-3'-sec-buthyl-5'-t-butylphonyl)bcnzotriazole.

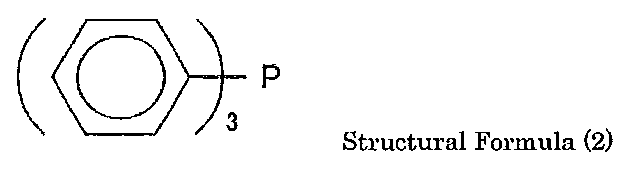

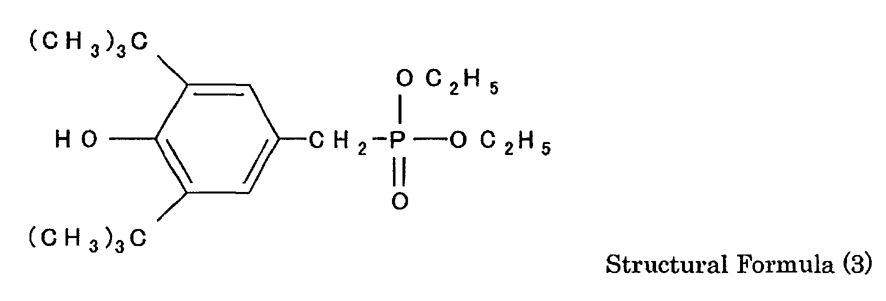

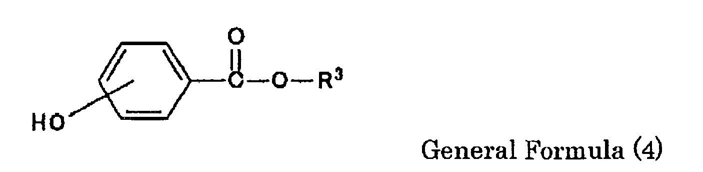

In General Formula (4), R³ represents an alkyl group having 1 to 18 carbon atoms, a cyclohexyl group, an alkenyl group an aralkyl group (which may have a substituent in an aromatic ring), and a phenyl group.

Examples of the hydroxy benzoic acid ester compound represented by General Formula (4) include m-hydroxy methyl benzoate, m-hydroxy ethyl benzoate, m-hydroxy phenyl benzoate, p-hydroxy methyl benzoate, p-hydroxy ethyl benzoate, n-propyl-p-hydroxy benzoate, n-butyl p-hydroxy benzoate, stearyl p-hydroxy benzoate, cyclohexyl p-hydroxy benzoate, benzyl p-hydroxy benzoate, 4-chlorobenzyl p-hydroxy benzoate, 4-methylbenzyl p-hydroxy benzoate, and p-hydroxy phenyl benzoate.

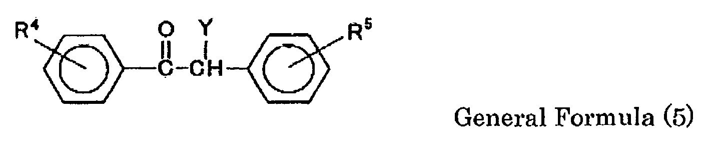

In General Formula (5), R⁴ and R⁵ may be identical to or different from each other, and represents an alkyl group or an alkoxy group; and Y represents a hydrogen atom or a hydroxyl group.

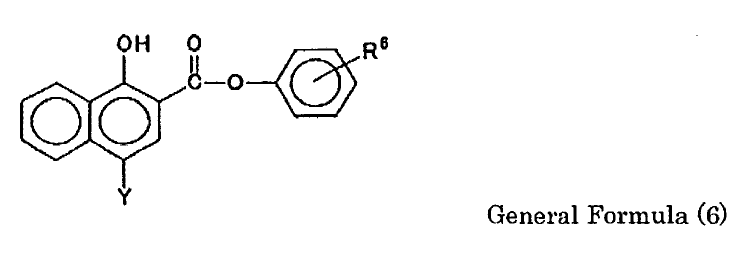

In General Formula (6), R⁶ represents any one of a hydrogen atom, a halogen atom, an alkyl group and an alkoxy group; and Y represents a hydrogen atom or a hydroxyl group.

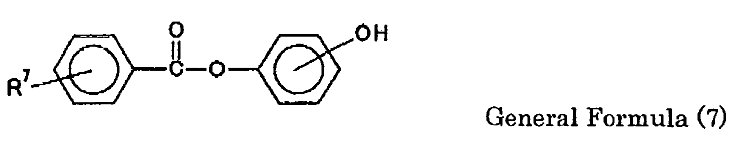

In General Formula (7), R⁷ represents any one of a hydrogen atom, a halogen atom, an alkyl group, and an alkoxy group.

In General Formulae (5) to (7), as the alkyl group, the same alkyl groups as described for General Formula (1) are exemplified.

Examples of the alkoxy group in General Formulae (5) to (7) include methoxy group, ethoxy group, propyloxy group, i-propyloxy group, butoxy group, i-butoxy group, t-butoxy group, pentyloxy group, hexyloxy group, cyclohexyloxy group, heptyloxy group, octyloxy group, 2-ethylhexyloxy group, nonyloxy group, decyloxy group, 3,7-dimethyloctyloxy group, and lauryloxy group.

The compound represented by General Formula (5) include toluoin, anisoin, m-anisoin, deoxytoluoin, deoxyanixoin, and 4,4'-diethylbenzoine, 4,4'-diethoxybenzoine. These may be used alone or in combination.

Examples of the compound represented by General Formula (6) include 1-hydroxy-2-phenylnaphthoate, 1-hydroxy- p-chlorophenyl-2 naphthoate, 1-hydroxy-2-o-chlorophonyl naphthoate, 1-hydroxy-2-p-methylphenyl naphthoate, 1-hydroxy-2-o-methylphenyl naphthoate, 1,4-dihydroxy-2-phonyl naphthoate, 1,4-dihydroxy-2-p-chlorophenyl naphthoate, and 1,4-dihydroxy-2-o-chlorophenyl naphthoate. These may be used alone or in combination.

Examples of the compound represented by General Formula (7) include 3-hydroxyphenyl benzoate, 4-hydroxyphenyl benzoate, 2-hydroxyphenyl benzoate, 3-hydroxyphonyl-o-mothylbenzoate, and 3-hydroxyphenyl p-chlorobenzoate.

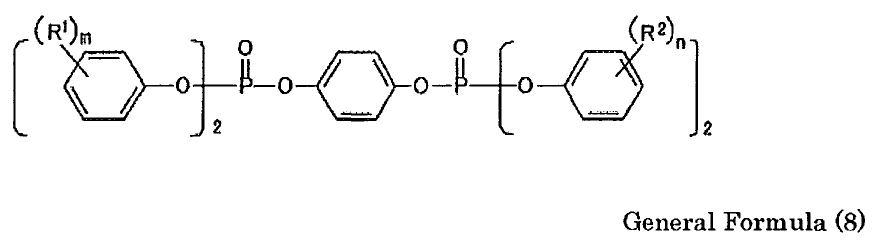

In General Formula (8), R¹ and R² may be identical to or different from each other, and each represent a hydrogen atom or an alkyl group; and m and n are each an integer of 1 to 5.

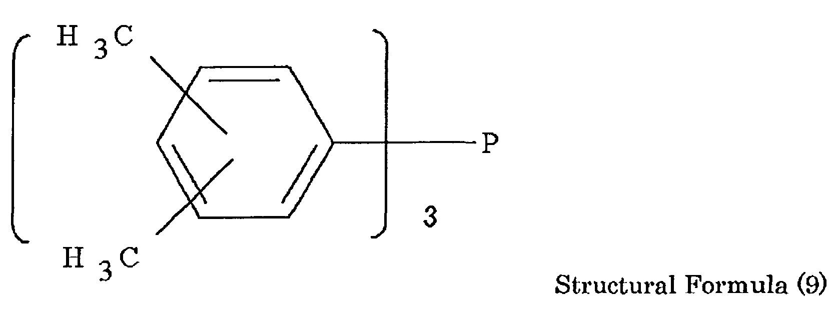

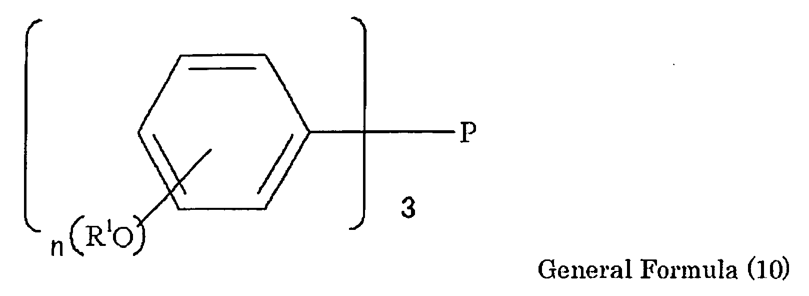

In General Formula (10), R¹ represents a hydrogen atom or an alkyl group; and n represents an integer of 1 to 5.

The solid plasticizers each represented by any one of General Formula (1), Structural Formulae (2) and (3), General Formulae (4) to (8), Structural Formula (9) and General Formula (10) can be used after they are pulverized to have a volume average particle diameter of 10 µm or smaller, and more preferably to have a volume average particle diameter of 3 µm or smaller. In addition, by further reducing the volume average particle diameter of the solid plasticizer, for example, to 0.5 µm or smaller, the dynamic thermal sensitivity is increased and the solid plasticizer be compatible with the thermoplastic resin and the tackifier at low energy to become a thermally active adhesive.

These solid plasticizers may be used alone or in combination with the compound represented by any one of General Formula (1), Structural Formulae (2) and (3), General Formulae (4) to (8), Structural Formula (9) and General Formula (10) in an arbitral ratio. In this case, the mixture ratio thereof can be arbitrarily adjusted.

In the present invention, from the viewpoint of the surface tackiness to corrugated cardboards, it is preferable to use a compound represented by any one of General Formula (1), Structural Formulae (2) and (3), with a mixture of a compound represented by General Formula (1) with a compound represented by Structural Formula (2), and a compound represented by Structural Formula (3) being particularly preferable.

The amount of the solid plasticizer contained in the heat-sensitive adhesive is not particularly limited and may be suitably selected in accordance with the intended use. It is, however, preferably 25% by mass to 80% by mass, and more preferably 35% by mass to 70% by mass. When the amount of the solid plasticizer is less than 25% by mass, blocking easily occurs in the case where it is used in combination with a thermoplastic resin, and a reduction in adhesive strength may be caused. When the amount of the solid plasticizer is more than 80% by mass, a reduction in adhesive strength may be caused.

### -- Tackifier --

The tackifier is not particularly limited and may be suitably selected in accordance with the intended use. A tackifier emulsion which is obtained by being emulsified in the presence of an emulsifier is preferable.

The tackifier is not particularly limited and may be selected and used from among various known tackifiers. Examples thereof include rosins, rosin derivatives, petroleum-based resins, and terpene-based resins. These may be used alone or in combination.

Examples of the rosins include raw material rosins such as gum rosin, wood rosin, and tall oil rosin; stabilized rosins obtained by a process where the raw material rosin is subjected to a disproportionation or hydrogenation treatment, and polymerized rosins.

Examples of the rosin derivatives include rosin esters, and rosin phenols.

Examples of the rosin esters include (1) rosin ester obtainable by an esterification reaction of the rosins with polyhydric alcohol; (2) polyhydric alcohol ester of a partially maleinated or fumarinated rosin which is obtainable by a process where a raw material rosin is partially fumarinated or partially maleinated, and then esterified; and (3) polyhydric alcohol esters of a partially maleinated and disproportionated or partially fumarinated and disproportionated rosin which is obtainable by a process where a raw material rosin is partially fumarinated or maleinated, then disproportionated and then esterified.

The polyhydric alcohol for use in the esterification is not particularly limited and may be suitably selected in accordance with the intended use. Examples thereof include diethylene glycol, glycerin, trimethylol propane, trimethylol ethane, 1,2,6-hexanetriol, 1,2,4-butanetriol, and pentaerythritol.

Examples of the petroleum-based resin include C5-based petroleum resin, C9-based petroleum resin, C5 to C9 copolymer-based petroleum resin, coumarone resins, coumarone-indene-based resins, pure monomer resins, dicyclopentadiene-based petroleum resin, or hydrogenated products thereof.

Examples of the terpene-based resin include aromatic-modified terpene-based resins which are obtained by copolymerization of terpenes such as α- pinene resin, β- pinene resin, α- pinene, and β-pinene, with an aromatic monomer such as styrene, or hydrogenated products thereof.

Among these, polymerized rosins or terpene phenol resins are particularly preferable.

In the present invention, as the tackifier, an emulsion which is obtained by being emulsified in the presence of a low-molecular weight emulsifier or a high-molecular weight emulsifier can be used, with an emulsion which is obtained by being emulsified in the presence of a high-molecular weight emulsifier being particularly preferable.

The low-molecular weight emulsifier means an emulsifier having a molecular weight of lower than 1,000.

The low-molecular weight emulsifier is not particularly limited. The emulsifier may be any type emulsifier, however, an anionic emulsifier and a nonionic emulsifier are preferable.

Examples of the anionic emulsifier include alkyl sulfuric acid salt type anionic emulsifiers such as sodium lauryl sulfate, ammonium lauryl sulfate, and potassium lauryl sulfate; polyoxyethylene alkyl ether sulfuric acid salt type anionic emulsifiers such as sodium polyoxyethylene lauryl ether sulfate; polyoxyethylene alkylphenyl ether sulfuric acid salt type anionic emulsifiers such as polyoxyethylene laurylphenyl ether ammonium sulfate, and sodium polyoxyethylene laurylphenyl sulfate; and sulfonic acid salt type anionic emulsifiers such as sodium dodecylbenzene sulfonate, and sulfosuccinic acid type anionic emulsifiers such as disodium lauryl sulfosuccinate, and disodium polyoxyethylene lauryl sulfosuccinate.

Examples of the nonionic emulsifier include polyoxyethylene alkyl ether type nonionic emulsifiers such as polyoxyethylene lauryl ether; polyoxyethylene alkylphenyl ether type nonionic emulsifiers such as polyoxyethylene laurylphenyl ether; polyoxyethylene fatty acid ester, and polyoxyethylene polyoxypropylene block polymers.

The use amount of the low-molecular weight emulsifier is not particularly limited and may be suitably selected in accordance with the intended use. It is, however, preferably, in terms of solid fraction, 1 part by mass to 10 parts by mass, and more preferably 2 parts by mass to 7 parts by mass, relative to 100 parts by mass of the tackifier. When the use amount of low-molecular weight emulsifier is more than 10 parts by mass, the adhesive strength of the resulting heat-sensitive adhesive may degrade. When the use amount is less than 1 part by mass, the storage stability of the emulsion-type adhesive resin may degrade.

As the high-molecular weight emulsifier, a high-molecular weight resin is used.

The mass average molecular weight of the high-molecular weight resin is preferably about 1,000 to about 200,000 from the viewpoint of dispersibility of the emulsion, and more preferably 5,000 to 40,000 from the viewpoint of the heat-sensitive adhesive material. When the mass average molecular weight of the high-molecular weight resin is less than 5,000, the blocking resistance may degrade, and when it is more than 40,000, the adhesive strength of the resulting heat-sensitive adhesive under low-temperature environments may degrade.

The mass average molecular weight can be measured, for example, by GPC(Gel Permeation Chromatography).

The high-molecular weight emulsifier is not particularly limited and conventionally known high-molecular weight emulsifiers may be used. For example, there may be exemplified reactive emulsifier, a high-molecular weight emulsifier primarily containing a styrene and/or (meth)acrylic alkyl ester anionic monomer (see Japanese Patent (JP-B) No. 3350910), a high-molecular weight emulsifier containing an anionic monomer-(meth)acrylic alkyl ester copolymer (see Japanese Patent Application Laid-Open (JP-A) No. 2005-200440), styrenes, (meth)acrylic alkyl ester, and a polymer salt which is copolymerized with an anionic monomer (see Japanese Patent Application Laid-Open (JP-A) No. 2007-2106).

The use amount of the high-molecular weight emulsifier is not particularly limited and may be suitably selected in accordance with the intended use. It is, however, preferably, in terms of solid fraction, 1 part by mass to 10 parts by mass, and more preferably 2 parts by mass to 7 parts by mass, relative to 100 parts by mass of the tackifier. When the use amount is more than 10 parts by mass, the adhesive strength of the resulting heat-sensitive adhesive may degrade, and when the use amount is less than 1 part by mass, the storage stability of the emulsion-type adhesive resin may degrade.

The emulsion method is not particularly limited, and a conventionally known high-pressure emulsification method, reverse emulsion method or the like may be employed. Specific examples of the emulsification method include (1) a method in which the tackifier is dissolved in a solvent such as benzene, and toluene, and the high-molecular weight emulsifier and soft water are added to the resulting solution to emulsify the solution using a high-pressure emulsification machine, followed by removing the solvent under reduced pressure; (2) a method in which a small amount of a solvent such as benzene, and toluene is added to the tackifier, subsequently, an emulsifier is kneaded into the resulting solution, further, hot water is gradually added thereto to make the solution phase-reversed, thereby obtaining an emulsion, followed by removing the solvent under reduced pressure, or the emulsion is used without removing the solvent; and (3) a method in which while the temperature of the tackifier is increased to a temperature equal to and higher than the softening point of the resin, an emulsifier is kneaded thereinto, and then hot water is gradually added thereto to make the solution phase-reversed, thereby the solution is emulsified.

The solid fraction concentration of the emulsion-type tackifier is not particularly limited and may be suitably selected in accordance with the intended use. It is, however, preferably 20% by mass to 70% by mass, and more preferably 40% by mass to 60% by mass.

The average particle diameter of the emulsion-type tackifier is not particularly limited and may be suitably selected in accordance with the intended use. It is, however, preferably 0.2 µm to 2 µm, and most of particles are uniformly dispersed as particles having particle diameters of 0.5 µm or smaller.

In addition, the emulsion-type tackifier shows a white or milky white appearance and has a pH of about 2 to about 9.

The amount of the tackifier contained in the heat-sensitive adhesive contained is not particularly limited and may be suitably selected in accordance with the intended use. It is, however, preferably, in terms of solid fraction, 1% by mass to 30% by mass, and more preferably 1% by mass to 20% by mass. When the amount of the tackifier is less than 1% by mass, the adhesive strength may significantly degrade. When it is more than 30% by mass, preservation problems (a reduction in blocking resistance) under common storage-temperature environments and a reduction in the initial adhesive strength under low temperature environments may occur.

Among these tackifiers, those using a high-molecular weight emulsifier are preferable in terms of blocking resistance and printer conveyance.

### -- Other Components --

The other components are not particularly limited, as long as these components do not impair the effects of the present invention, and may be suitably selected in accordance with the intended use. Examples of the other components include a covalence agent, a dispersant, an anti-foaming agent, a thickener, and a blocking inhibitor.

The addition amount of the other components is not particularly limited and may be suitably selected in accordance with the intended use.

### < Support >

The shape, structure, and size of the support are not particularly limited and may be suitably selected in accordance with the intended use. Examples of the shape include a flat plate shape. For the structure, the support may have a single layer structure or may have a multi-layered structure. The size of the support may be suitably selected in accordance with the size of the heat-sensitive adhesive material.

Materials of the support are not particularly limited and may be suitably selected in accordance with the intended use. The materials thereof are broadly classified into inorganic materials and organic materials.

For example, inorganic materials or organic materials are exemplified. Examples of the inorganic materials include glass, quartz, silicon, silicon oxides, aluminum oxides, SiO₂ and metals.

Examples of the organic materials include papers such as high-quality paper, art paper, coat paper and synthetic paper; cellulose derivatives such as cellulose triacetate; polyester resins such as polyethylene terephthalate (PET) and polybutylene terephthalate; and polyolefins such as polycarbonate, polystyrene, polymethyl methacrylate, polyamide, polyethylene and polypropylene. Of these, high-quality paper, coat paper, plastic film and synthetic paper are preferable, and plastic film and synthetic paper are particularly preferable.

It is preferable that the support surface is reformed by subjecting the surface to a corona discharge treatment, an oxidizing reaction treatment (with chromic acid, etc.), an etching treatment, an easy bonding treatment, or an antistatic treatment to improve the adhesion properties of coating layers. Note that it is preferable to add a white pigment such as a titanium oxide to the support.

The thickness of the support is not particularly limited and may be suitably selected in accordance with the intended use. It is, however, preferably 50 µm to 2,000 µm, and more preferably 100 µm to 1,000 µm.

By applying the heat-sensitive adhesive of the present invention to one surface of a base, it is possible to obtain a heat-sensitive adhesive material which has strong adhesive strength to vinyl chloride wraps, polyolefin wraps, particularly, to corrugated cardboards and is excellent in blocking resistance.

Raw paper preferably used for the support primarily contains a wood pulp and a filler. The wood pulp contains a pulp such as a chemical pulp (e.g., LBKP, and NBKP); a mechanical pulse (e.g., GP, PGW, RMP, TMP, CTMP, CMP, and CGP); or a recycled waste paper (e.g., DIP), and the support can be produced using a paper machining device selected from various devices such as a Fourdrinier paper machine, a cylinder machine, and a twin-wire paper machine after mixing at least one additives selected from a conventionally known pigment and binder, a sizing agent, a fixing agent, a yield improver, a cationizing agent, and a paper-strength enhancing agent. In addition, the raw paper may be subjected to on-machine treatment using a calendering machine which includes a metal roll and a synthetic roll. At this time, the raw paper may be treated with off-machine treatment, and thereafter, may be further treated with calendering using a calendering machine, a super calender, or the like to control the surface flatness.

Examples of the filler contained in the raw paper include white inorganic pigments such as light potassium carbonate, heavy potassium carbonate, kaolin, talc, calcium sulfate, titanium dioxide, zinc oxide, zinc sulfate, satin white, aluminum silicate, diatom earth, potassium silicate, magnesium silicate, synthetic silica, aluminum hydroxide, alumina, lithopone, zeolite, magnesium carbonate, and magnesium hydroxide; and organic pigments such as styrene-based plastic pigments, acryl-based plastic pigments, polyethylene, microcapsules, urea resins, and melamine resins.

Examples of the sizing agent contained in the raw paper include acidic paper-machine rosin sizing agents, neutral paper-machine modified sizing agents, AKD, ASA, and cationic polymer type sizing agents.

As for the support, typical paper such as glassine paper, coated paper, and cast paper are also used, and raw materials generally used in paper machining may be used as required. In addition, a plastic sheet such as polyethylene, polypropylene, polyethylene terephthalate, and polyamide, synthetic fabrics and nonwoven fabrics thereof; or laminated paper in which a synthetic resin is laminated on one surface or both surfaces of paper; a metal foil or a metal foil and paper, vapor deposited paper, an opaque sheet which is subjected to hologram processing; a laminated paper which is laminated with a synthetic resin film, mica paper, glass paper etc. can also be used for the support.

The production method of the heat-sensitive adhesive material is not particularly limited and may be suitably selected in accordance with the intended use. For example, the heat-sensitive adhesive material can be produced by applying a coating solution onto the support by a conventionally known bar coater, roll coater, applicator, hot melt coater or the like and then drying the coating solution by hot air drying, an infrared ray, a microwave, a high-frequency wave.

As the amount of coating of the heat-sensitive adhesive layer, it is usually applied, in terms of dry coat amount, in the range of 2 g/m² to 35 g/m², and more preferably in the range of 5 g/m² to 25 g/m². When the amount of coating of the heat-sensitive adhesive layer is less than 2 g/m², a sufficient adhesive strength cannot be obtained when it is bonded by heating. When the amount of coating is more than 35 g/m², the adhesion function is saturated and economically disadvantageous.

### < Under Layer >

The heat-sensitive adhesive material preferably has an under layer between the heat-sensitive adhesive layer and the support.

The adhesive strength of the heat-sensitive adhesive material can be improved by providing the under layer between the heat-sensitive adhesive layer and the support.

The under layer is not particularly limited and may be suitably selected in accordance with the intended use. However, a hollow under layer and an adhesive under layer are preferable.

The under layer may be formed into a single layer or multiple layers. For example, there may be exemplified (1) an aspect where the under layer has only a hollow under layer; and (2) an aspect where the under layer has an adhesive under layer and a hollow under layer. Note that, in the case of (2), it is preferable that the adhesive under layer and the hollow under layer be provided in this order over the support.

### - Hollow Under Layer -

The hollow under layer include at least hollow particles and a thermoplastic resin, and as required, other components.

By providing the hollow under layer, the thermally efficiency is improved and the adhesive strength can be improved.

The hollow under layer is not particularly limited and may be suitably selected in accordance with the intended use. It is, however, a hollow under layer which is formed by emulsification polymerization of hollow particles and a reactive surfactant is preferable.

The thermoplastic resin, in the under layer, which is obtained by emulsion polymerization using a reactive surfactant, can be formed by using a thermoplastic resin having a glass transition temperature (Tg) of -70°C to -5°C.

Examples of the thermoplastic resin include natural rubber latex graft-copolymerized with vinyl monomers, styrene-butadiene copolymers, acrylic acid ester copolymers, methacrylic acid ester copolymers, acrylic acid ester-methacrylic acid ester copolymers, acrylic acid ester-acrylonitrile copolymers, acrylic acid ester-acrylonitrile-vinyl acetate- copolymers, acrylic acid ester-styrene copolymers, acrylic acid ester-methacrylic acid ester-styrene copolymers, and ethylene-vinyl acetate copolymers. These thermoplastic resins may be used alone or in combination. Among these, acrylic acid ester copolymers, acrylic acid ester-acrylonitrile copolymers, acrylic acid ester-acrylonitrile-vinyl acetate copolymers, acrylic acid ester-styrene copolymers, and acrylic acid ester-methacrylic acid ester-styrene copolymers are particularly preferable.

The hollow particles are not particularly limited, and may be suitably selected in accordance with the intended use. However, spherically shaped plastic hollow particles having a volume average particle diameter of 2.0 µm to 5.0 µm and a hollow rate of 70% or higher are preferable, and spherically shaped hollow particles having a maximum particle diameter of 10.0 µm or smaller as well as a volume average particle diameter of 2.0 µm to 5.0 µm and a hollow rate of 70% or higher are more preferable. The hollow rate is more preferably 85% to 95%.

When the hollow rate is lower than 70%, thermal energy from a thermal head used is released outside through the support because of insufficient heat insulation effect, and the effect of improving the adhesion strength may degrade. When the volume average particle diameter is greater than 5.0 µm, and in the case where a heat-sensitive adhesive layer is provided on an under layer using such hollow particles, the heat-sensitive adhesive layer may not be formed in some portions of the under layer in which large particles are present, and thus the adhesion strength easily decreases when the heat-sensitive adhesive material is thermally activated. When the volume average particle diameter is smaller than 2.0 µm, it is difficult to maintain the hollow rate of 70% or higher, and the effect of increasing the adhesion strength may decrease.

Here, the term "spherically shaped plastic hollow particles" means hollow particles containing a thermoplastic resin as a core, and containing air and other gases at the inside thereof, in an already-foamed state. The term "hollow rate" means a ratio of a volume of the hollow fine particles on the basis of outer diameter thereof with a volume thereof on the basis of inner diameter thereof.

Material of the spherically shaped hollow particles is not particularly limited and may be suitably selected in accordance with the intended use. Examples thereof include vinylidene chloride-acrylonitrile copolymers, acrylonitrile-vinylidene chloride-methyl methacrylate copolymers, and acrylonitrile-methacrylonitrile-isobornyl methacrylate copolymers.

A mixture ratio of the thermoplastic resin having a glass transition temperature (Tg) of -70°C to -5°C and the hollow particles, in the hollow under layer, is not particularly limited and may be suitably selected in accordance with the intended use. The amount of the hollow particles is, however, preferably 4.1 parts by mass to 2 parts by mass, and more preferably 0.3 parts by mass to 1 part by mass, relative to 1 part by mass of the thermoplastic resin. When the amount of the hollow particles is less than 0.1 parts by mass, the effect of increasing the adhesion strength may decrease. When it is more than 2 parts by mass, the binding force of the hollow under layer decreases, and thus the resulting heat-sensitive adhesive material may the adhesive strength may be weak.

The method of forming the hollow under layer is not particularly limited, and may be formed according to a conventionally known method. The adhesive under layer may be favorably formed by a conventionally known coating method using an under layer coating liquid containing the above-mentioned components.

Examples of the coating method include blade coating, gravure coating, gravure offset coating, bar-coating, roll coating, knife coating, air-knife coating, comma coating, U comma coating, AKKU coating, smoothing coating, micro-gravure coating, reverse roll coating, coating method using four rollers or five rollers, dip coating, drop curtain coating method, slide coating, and die coating.

When the under layer has only the hollow under layer, the amount of coating of the hollow under layer coating liquid is not particularly limited and may be suitably selected in accordance with the intended use. The amount of coating of the hollow under layer coating liquid is preferably, in terms of dry coat amount, in the range of 1 g/m² to 35 g/m², and more preferably in the range of 1 g/m² to 5 g/m². When the amount of coating is less than 1 g/m², a sufficient adhesive strength cannot be obtained when it is bonded by heating, and the heat insulation effect may decrease. When it is more than 35 g/m², the sufficient adhesive strength and heat insulation effect may be saturated.

### - Adhesive Under Layer -

The adhesive under layer includes at least a thermoplastic resin, and as required, includes other components such as a tackifier.

In the present invention, the adhesive strength of the resulting heat-sensitive adhesive material can be further improved by providing the adhesive under layer between the hollow under layer and the support.

The adhesive under layer is not particularly limited and may be suitably selected in accordance with the intended use. However, an adhesive under layer formed of a thermoplastic resin which is obtained by emulsion polymerization using a reactive surfactant, and an adhesive under layer formed of a thermoplastic resin which is obtained by emulsion polymerization using a reactive surfactant and a tackifier are preferable. By adding the tackifier to the adhesive under layer, the adhesive strength can be further increased.

The addition amount of the tackifier is not particularly limited and may be suitably selected in accordance with the intended use. It is, however, preferably 0.1 parts by mass to 1 part by mass relative to 1 part by mass of the thermoplastic resin.

When the under layer includes an adhesive under layer and a hollow under layer, the amount of coating of the hollow under layer is not particularly limited and may be suitably selected in accordance with the intended use. It is, however, preferably, in terms of dry coat amount, 1 g/m² to 5 g/m², and more preferably 1 g/m² to 2 g/m². When the amount of coating of the hollow under layer is less than 1 g/m², the heat insulation effect of the resulting heat sensitive adhesive material is small, and when it is more than 5 g/m², unfavorably, the effect of increasing the adhesive strength given from the adhesive under layer is reduced.

The amount of coating of the adhesive under layer is not particularly limited and may be suitably selected in accordance with the intended use. It is, however, preferably, in terms of dry coat amount, 2 g/m² to 35 g/m², and more preferably 4 g/m² to 35 g/m².

The thermoplastic resin emulsion-polymerized using a reactive surfactant, in the adhesive under layer, can be formed by using a thermoplastic resin having a glass transition temperature of -70°C to -5°C.

Examples of the thermoplastic resin include a natural rubber latex obtained by graft copolymerization using a vinyl-based monomer, an acrylic acid ester copolymer, a methacrylic acid ester, an acrylic acid ester-methacrylic acid ester copolymer, an acrylic acid ester-styrene copolymer, an acrylic acid ester-methacrylic acid ester-styrene copolymer, and an ethylene-vinyl acetate copolymer. In the case of using a resin having high glass transition temperature, the characteristics of the adhesive under layer and the intermediate layer cannot be obtained at all, and the adhesive strength to rough-surfaced adherends such as a corrugated cardboard is weak, resulting an adhesive strength obtained only from the heat-sensitive adhesive layer which is provided over the adhesive under layer.

Meanwhile, most resins respectively have a glass transition temperature of -70°C or higher. Even when a resin having low glass transition temperature departing from the Tg range of the thermoplastic resin of the present invention is used, there is no particular problem. It is, however, unfavorable in terms of high costs.

The method of forming the adhesive under layer is not particularly limited, and may be formed according to a conventionally known method. The adhesive under layer is favorably formed by a conventionally known coating method using an adhesive under layer coating liquid in which the above-mentioned components and the other components as required are stirred and dispersed in water.

Examples of the coating method include blade coating, gravure coating, gravure offset coating, bar-coating, roll coating, knife coating, air-knife coating, comma coating, U comma coating, AKKU coating, smoothing coating, micro-gravure coating, reverse roll coating, coating method using four rollers or five rollers, dip coating, drop curtain coating method, slide coating, and die coating.

### < Recording Layers

The heat-sensitive adhesive material preferably has a recording layer on an opposite surface of the support to a surface thereof provided with the heat-sensitive adhesive layer.

The recording layer is not particularly limited and may be suitably selected in accordance with the intended use. It is, however, preferably a heat-sensitive recording layer primarily containing a leuco dye and a color developing agent.

A color former for use in the heat-sensitive recording layer is not particularly limited and may be suitably selected in accordance with the intended use. For example, a triallylmethane-based compound, a diarylmethane-based compound, a xanthene-based compound, a thiazine-based compound, a spiropyran-based compound, a diphenylmethane-based dye, a spiro-based dye, a lactam-based dye, and fluoran-based dye may be used.

Specific examples of the color former include a triallylmethane-based dye, a diphenylmethane-based dye, a diphenylmethane-based dye, a spiro-based dye, a lactam-based dye, and a fluoran-based dye.

Examples of the triallylmethane-based dye include 3,3-bis(p-dimethylaminophenyl)-6-dimethylaminophthalide(crystal violet lactone), 3,3-bis(p-dimethylaminophenyl)phthalide, 3-(p-dimethylaminophenyl)-3-(1, 2-dimethylindole-3-yl)phthalide, 3-(p-dimethylaminophenyl)-3-(2-methylindole-3-yl)phthalide, 3,3-bis(1,2-dimethylindole-3-yl)-5-dimethylaminophthalide, 3,3-bis(9-ethylcarbazole-3-yl)-6-dimethylaminophthalide, 3,3-bis(2-phenylindole-3-yl)-6-dimethylaminophthalide, 3-p-dimethylaminophenyl-3-(1-methylpyrrole-3-yl)-6-dimethylaminophth alide, 3-p-dimethylaminophenyl-3-(1-methylpyrrole-2-yl)-6-dimethylaminophth alide3-(p-dimethylaminophenyl)-3-(2-methylindole-3-yl)phthalide, 3-(p-dimethylaminophenyl)-3-(2-phenylindole-3-yl)phthalide, 3,3-bis(1,2-dimethylindole-3-yl)-5-dimethylaminophthalide, 3,3-bis(1,2-dimethylindole-3-yl)-6-dimethylaminophthalide, 3,3-bis(9-ethylearbazole-3-yl)-5-dimethylaminophthalide, and 3,3-bis(2-phenylindole-3-yl)-5-dimethylaminophthalide.

Examples of the diphenylmethane-based dye include 4,4'-bis-dimethylaminophenylbenzhydrylbenzyl ether, 4,4'-bis-dimethylaminobenzhydrylbenzyl ehter, N-halophenyl leucoauramine, and N-2,4,5-trichlorophenyl leucoauramine.

Examples of the thiazine-based dye include benzoyl leuco methylene blue, and p-nitrobenzoyl leuco methylene blue.

Examples of the spiro-based dye include 3-methylspiro-dinaphthopyran, 3-ethyl-spiro-dinaphthopyran, 3,3'-dichlorospirodinaphthopyran, 3-phenyl-spiro-dinaphthopyran, 3-benzyl-spiro-dinaphthopyran, 3-propylspirobenzopyran, 3-methylnaphtho-(3-methoxybenzo)spiropyran, 3-methyl-naphtho(6'-methoxybenzo)spiropyran, and 3-propyl-spirodibenzopyran.

Examples of the lactam-based dye include rhodamine-B-anilino lactam, rhodamine(p-nitroanilino)lactam, and rhodamine(o-chloroanilino)lactam.

Examples of the fluoran-based dye include rhodamine B anilinolactam, rhodamine B -p-chloroanilinolactam, 3-diethylamino-7-dibenzylaminofluoran, 3-dimethylamino-7-dibenzylaminofluoran, 3-diethylamino-7-octylaminofluoran, 3-diethylamino-7-phenylfluoran, 3-dimethylamnino-7-methoxyfluoran, 3-diethylamino-7-N-diethylaminofluoran, 3-diethylamino-7-methoxyfluoran, 3-diethylamino-6-methoxyfluoran, 3-diethylamino-6-methyl-7-chlorofluoran, 3-diethylamino-7-chlorofluoran, 3-diethylamino-6-chloro-7-methylfluoran, 3-diethylamino-7-(3,4-dichloroanilino)fluoran, 3-diethylamino-7-(2-chloroanilino)fluoran, 3-diethylamino-6-methyl-7-anilinofluoran, 3-diethylamino-6-methyl-7-phenylaminofluoran, 3-diethylamino-6,7-dimethylfluoran, 3-(N-ethyl-N-tolyl)amino-6-mothyl-7-anilinofluoran, 3-piperidino-6-methyl-7-anilinofluoran, 3-(N-ethyl-N-tolyl)amino-6-methyl-7-phenetylfluoran, 3-diethylamino-7-(4-nitroanilino)fluoran, 3-dibutylamino-6-methyl-7-anilinofluoran, 3-(N-methyl-N-propyl)amino-6-methyl-7-anilinofluoran, 3-(N-ethyl-p-toluidino)-7-methylfluoran, 3-(N-ethyl-p-toluidino)-6-mothyl-7-phenylaminofluoran, 3-(N-ethyl-p-toluidino)-6-mothyl-7-(p-toluidino)fluoran, 3-diethylamino-7-(2-carbomethoxy-phenylamino)fluoran, 3-diethylamino-7-N-acetyl-N-methylaminofluoran, 3-(N-ethyl-N-isoamyl)amino-6-methyl-7-anilinofluoran, 3-diethylamino-7-N-chloroethyl-N-methylaminofluoran, 3-diethylamino-7-methyl-N-benzylaminofluoran, 3-diethylamino-7-N-methylaminofluoran, 3-(N-methyl-N-cyclohexyl)amino-6-methyl-7-anilinofluoran, 3-(N-ethyl-N-iso-amylamino)-6-methyl-7-phenylaminofluoran, 3-(N-cyclohexyl -N-methylamino)-6-methyl-7-phenylaminofluoran, 3-(N-ethyl-N-tetrahydrofuryl)amino-6-methyl-7-anilinofluoran, 3-piperidino-6-mothyl-7-phenylaminofluoran, 3-pyrrolidino-6-methyl-7-phenylaminofluoran, 3-diethylamino-6-mothyl-7-xylidinofluoran, 3-diethylamino-7-(o-chlorophenylamino)fluoran, 3-dibutylamino-7-(o-chlorophenylamino)fluoran, and 3-pyrrolidino-6-methyl-7-p-butylphenylaminofluoran.

As for the color developing agent, an electron-accepting material generally used in heat-sensitive recording paper is used. Particularly, phenol derivatives, aromatic carboxylic acid derivatives or metal compounds thereof, N,N'-diarylthio urea derivatives, a mixture of an organic acid with a metal compound, acidic polymers (e.g., phenol formaldehyde resins, salicylic acid-based resins or polyvalent metal salts thereof such as zinc, magnesium, aluminum, calcium, titanium, manganese, tin, and nickel) may be used. Among these, phenol derivatives, aromatic carboxylic acid derivatives or metal compounds thereof, and N,N'-diaryl urea derivatives are especially used.

Among these, particularly preferred are phenol derivatives, aromatic carboxylic acids and phenolic compounds thereof. Specific examples of the particularly preferred compounds for the color developing agent include 1,1-bis(p-hydroxyphenyl)propane, 2,2-bis(p-hydroxyphenyl)propane, 2,2-bis(p-hydroxyphenyl)butane, 2,2-bis(p-hydroxyphenyl)hexane, bisphenol sulfone, bis(3-allyl-4-hydroxyphenyl)sulfone, 4-hydroxy-4'-isopropyloxydiphenylsulfone, 3,4-dihydroxy-4'-methyldiphenylsulfone, diphenol ether, p-hydroxybenzyl benzoate, p-hydroxypropyl benzoate, p-hydroxybutyl benzoate, p-tert-butyl benzoate, trichlorobenzoate, 4-hydroxyoctyl benzoate, benzoic aid, terephthalic acid, 3-sec-butyl-4-hydroxybenzoate, 3-chylohexyl-4-hydroxy benzoate, 3,5-dimethyl-4-hydroxybenzoate, salicylic acid, 3-isopropylsalicylate, 3-tert-butylsalicylate, 3-benzylsalicylate, 3-(α-methylbenzyl)salicylate, 3-chloro-5-(α-methylbenzyl), 3,5-di-α-methylbenzyl salicylate, 3,5-di-tert-butyl salicylate, 3-phenyl-5-(α,α-dimethylbenzyl)salicylate, 4-tert-butylphenol, 4-hydroxydiphenoxide, α-naphthol, β-naphthol, 4-hydroxyacetophenol, 4-tert-catechol, 2,2'-dihydroxydiphenol, 2,2'-methylene-bis(4-methyl-6-tert-isobutylphenol, 4,4'-isopropylidene-bis(2-tert-butylphenol), 4,4'-sec-butylidenediphenol, 4-phenylphenol, 4,4'-isopropylidenediphenol, 2,2'-methylene-bis(4-chlorophenol), hydroquinone, 4,4'-cyclohexylidenediphenol, 4-hydroxydimethyl phthalate, hydroquinone monobenzyl ether, novolac-type phenol resins, and phenolic compounds such as phenol polymers.

The binder for use in the heat-sensitive recording layer is not particularly limited and may be suitably selected in accordance with the intended use. Examples thereof include starches; cellulose derivatives such as hydroxyethylcellulose, methylcellulose, ethylcellulose, and carboxymethylcellulose; proteins such as casein, and gelatin; aqueous-based natural polymer compounds such as saccharose (e. g., starch oxide and ester compound-containing starch); aqueous-based synthetic polymer compounds and latexes such as polyvinyl alcohol, modified polyvinyl alcohol, polyvinyl pyrrolidone, polyacrylic acid, polyacrylic acid soda, acrylic acid amide-acrylic acid ester compounds, acrylic acid amide-acrylic acid ester-methacrylic acid ternary copolymers, alkali salts of styrene-maleic anhydride copolymers, latex, polyacrylamide, and styrene-maleic anhydride copolymers; aqueous-based adhesive resins such as alkali salts of ethylene-maleic anhydride copolymers; and latexes such as polyvinyl acetate, polyurethane, polyacrylic acid ester, styrene-butadiene copolymers, acrylonitrile-butadiene copolymers, methyl acrylate-butadiene copolymers, acrylonitrile-butadiene-acrylic acid copolymers, and ethylene-vinyl acetate copolymers.

In addition, in order to further improve the thermal sensibility of the heat-sensitive recording layer, the following may be added as a sensitizer to the heat-sensitive adhesive layer: waxes such as N-hydroxymethylstearic acid amide, stearic acid amide, and pulmitic acid amide; naphthol derivatives such as 2-benzyloxynaphthalene; biphenyl derivatives such as p-benzylbiphenyl, and 4-allyloxybiphenyl; polyether compounds such as 1,2-bis(3-methylphenoxy)ethane, 2,2'-bis(4-methoxyphenoxy)diethyl ether, and bis(4-methoxyphenyl)ether; a carbonic acid such as diphenyl carbonate, dibenzyl oxalate, and oxalic acid di(p-chlorobenzyl)ester or oxalic acid diester derivatives.

As the pigment for use in the heat-sensitive recording layer, there may be exemplified diatom earth, talc, kaolin, calcined kaolin, calcium carbonate, magnesium carbonate, titanium oxide, zinc oxide, silicon oxide, aluminum hydroxide, and urea-formalin resin.

An intermediate layer for improving the heat-sensitive color-forming properties and preventing occurrence of print residues caused by printing may be provided under the heat-sensitive recording layer, i.e., on the support, or a protective layer for preventing occurrence of smear due to color forming and imparting water resistance may be provided on the heat-sensitive recording layer.

The coating method for providing the heat-sensitive recording layer, the intermediate layer, the protective layer, and the heat-sensitive adhesive layer is not particularly limited. These layers (coating solutions) can be applied over the support using a blade coater, gravure coater, gravure offset coater, bar-coater, roll coater, knife coater, air-knife coater, comma coater, U comma coater, AKKU coater, smoothing coater, micro-gravure coater, reverse roll coater, coater using four rollers or five rollers, dip coater, drop curtain coater, slide coater or die coater commonly used in paper coating or may be printed over on the support using various printers such as a Flexo-printer, letterpress printer, gravure printer, or offset printer.

As for the dry conditions during coating or printing these layers over the support, these layers must be dried within a temperature range where a solid plasticizer used is not melted. The drying method is not particularly limited and may be suitably selected in accordance with the intended use. For example, besides hot air drying, a drying method using a heat source which employs infrared rays, micro waves or high-frequency waves can be used.

On an opposite surface of the heat-sensitive recording material to a surface thereof provided with the heat-sensitive adhesive layer, a pre-printing layer may also be provided in accordance with the intended use, and registration printing as a sensing method may also be provided on the surface of the heat-sensitive adhesive layer. For both printing methods described above, there may be exemplified typical printing methods such as UV printing, EB printing, and Flexo-printing.

The shape of the heat-sensitive adhesive material is not particularly limited and may be suitably selected in accordance with the intended use. A label shape, a sheet shape, a roll shape and the like are preferable. Among these, from the viewpoints of convenience, storage place, and handleability, the heat-sensitive adhesive material is preferably stored in a state where it is wound on a cylinder-shaped core material into a roll shape.

The adherend to which the heat-sensitive adhesive material of the present invention is affixed is not particularly limited, and the size, shape, structure, and material of the adherend may be suitably selected in accordance with the intended use. Suitable examples of materials of the adherend include resin plates such as polyolefin (e.g., polyethylene, and polypropylene), acryl, polyethylene terephthalate (PET), polystyrene, and nylon; metal plates such as SUS, and aluminum; paper products such as and envelope and corrugated cardboard; wraps such as polyolefine wrap, and polyvinyl chloride wrap; and unwoven fabrics such as polyethylene unwoven fabric.

The heat-sensitive adhesive material can be activated to exhibit surface tackiness by a heating method through use of a thermal head, and when the activation energy is 25 mJ/mm² or higher, the heat-sensitive adhesive material can completely exhibit surface tackiness.

In recent years, printers are required to provide safety, energy saving, and compactness of apparatus. Japanese Patent Application Laid-Open (JP-A) Nos. 11-79152, 11-65451, 10-35126, 11-157141, 11-311945, 2001-303036, 2001-48139 and 2003-316265 respectively disclose a thermal activation unit using a thermal head as a thermal activation method. By using a thermal head as a thermal activation method of a heat-sensitive adhesive material, the energy consumption amount during thermal activation has been reduced, and the safety and compactness of printing apparatus have been more improved than ever before.

The heat-sensitive adhesive material of the present invention preferably exhibits surface tackiness by heating with a line-type thermal head.

Especially, (JP-A) 2003-316265 discloses an apparatus which performs print recording of a heat-sensitive color forming layer using a thermal head, guillotine cutting by upper and lower blades (a fixed blade and a movable blade) and activation of a heat-sensitive adhesive layer through a thermal head in one process, in which a heat-sensitive adhesive material in a belt-shape disposed at an interval between a cut section and an activation section is made sagged and then cut, and the heat-sensitive adhesive label that has been cut is inserted between the thermal head in the activation section and a platen roll.

### < Printer Paper Jamming >

The mechanism that the problem with paper jamming of a thermally activated heat-sensitive adhesive material after it is wound on a platen roll, which is solved by the present invention, is assumed due to the following process.
(I) A heat resistor in a thermal head heated through conducting is brought into contact with a heat-sensitive adhesive layer, and at this time, the heat-sensitive adhesive material is activated to be tackified. Part of the tackified heat-sensitive adhesive layer is attached as glue residues to a surface of the resistor.
(II) The thermally activated heat-sensitive medium is ejected, and the plantain roll temporarily comes into contact with the peripheral of the resistor. At this time, the glue residues attached to the surface of the thermal head is transferred onto the platen roll.
(III) The courses of (I) and (II) are repeated, and the glue residues attached to the platen roll increases in amount. The platen roll with the glue residues attached thereto is brought into contact with a surface of the heat-sensitive adhesive medium and lifts the heat-sensitive adhesive medium itself to cause paper jamming. The paper jamming phenomenon is more conspicuous as the adhesive strength of the heat-sensitive adhesive material itself is higher and easily caused in a medium used in a rough-surfaced adherend such as corrugated cardboard and in a medium having high adhesive strength in low-temperature environments, particularly under high-temperature and high-humidity environments.

To solve paper jamming caused through this process, reducing the amount of glue residues attached to the surface of the thermal head in (1) is an essential solution.

The adhesion of part of the tackified heat-sensitive adhesive layer to the thermal head is attributable to excessively low melting viscosity of the activated and tackified glue, and the problem can be solved by increasing the melting viscosity of the tackified heat-sensitive adhesive layer where glue residues do not adhere on the thermal head.

Increasing the melting viscosity of the heat-sensitive adhesive layer can be achieved by increasing the cohesion inside the heat-sensitive adhesive layer. A heat-sensitive adhesive layer generally a thermoplastic resin and a solid plasticizer as main components, and the solid plasticizer is melted by heating and incorporated into (compatible with) the thermoplastic resin on the molecular level, and thereby the heat-sensitive adhesive layer is tackified. At this time, a surfactant (emulsifier) contained in the thermoplastic resin increases in water sensitivity and functions as a plasticizer, thereby increasing the melting viscosity of the heat-sensitive adhesive layer. Therefore, it can be considered that it is possible to prevent the reduction in melting viscosity and the increase in water sensitivity by reducing the amount of the surfactant (emulsifier) contained in the heat-sensitive adhesive material.

The heat-sensitive adhesive material of the present invention has strong adhesive strength to rough-surfaced adherends such as corrugated cardboards and is excellent in blocking resistance in 60°C environments and in storage stability. Further, the heat-sensitive adhesive material of the present can eliminate smear on a platen roll when it is thermally activated through a thermal head and solve the problem with paper jamming.

### EXAMPLES

Hereinafter, the present invention will be further described with reference to Examples, which shall not be construed as limiting the scope of the present invention. Note that "part(s) and "%" described hereinbelow respectively mean "parts by mass" and "% by mass" unless otherwise specified.

### (Production Example 1)

### < Synthesis of Thermoplastic Resin Liquid [A-1 Liquid] >

Deionized water (80 parts) was poured into a reaction vessel equipped with a stirring device, heated to 80°C, and the inside of the reaction vessel was purged with nitrogen.

Next, a mixture containing the following composition was prepared, emulsified by a homogenizer, and then added dropwise into the deionized water from a dropping tube in 2 hours. After completion of the dropping, the reaction product was further reacted at 80°C for 3 hours to thereby obtain Thermoplastic Resin Liquid [A-1 Liquid] (acryl-based resin emulsion having a solid fraction of 50%).

A glass transition temperature (Tg) of the resulting thermoplastic resin, which was determined by calculation, is shown in Table 1.
- deionized water ...... 40 parts
- reactive emulsifier (AQUARON KH10 produced by DAI-ICHI KOGYO SEIYAKU CO., LTD.) ····· 2.5 parts
- potassium persulfate ····· 0.5 parts
- monomer mixture ([A-1] in Table 1) ····· 100 parts

### (Production Examples 2 to 5)

### < Synthesis of Thermoplastic Resin Liquids [A-2 Liquid] to [A-5 Liquid] >

Thermoplastic Resin Liquids [A-2 Liquid] to [A-5 Liquid] (acryl-based resin emulsions each having a solid fraction of 50%) were obtained in the same manner as in Production Example 1, except that [A-11, as a monomer mixture, shown in Table 1 was changed to [A-2] to [A-5] in Table 1.

A glass transition temperature (Tg) of the resulting thermoplastic resins, each of which was determined by calculation, is shown in Table 1.

### (Production Example 6)

### < Synthesis of Thermoplastic Resin Liquid [A-6 Liquid] >

Deionized water (80 parts) was poured into a reaction vessel equipped with a stirring device, heated to 70°C, and the inside of the reaction vessel was purged with nitrogen.

Next, a mixture containing the following composition was prepared, emulsified by a homogenizer, and then added dropwise into the deionized water from a dropping tube in 2 hours. After completion of the dropping, the reaction product was further reacted at 70°C for 3 hours to thereby obtain Thermoplastic Resin Liquid [A-6 Liquid] (acryl-based resin emulsion having a solid fraction of 50%).

A glass transition temperature (Tg) of the resulting thermoplastic resin, which was determined by calculation, is shown in Table 1.
- deionized water ····· 40 parts
- reactive emulsifier (AQUARON HS-20 produced by DAI-ICHI KOGYO SEIYAKU CO., LTD.) ····· 0.5 parts
- ammonium persulfate ····· 3 parts
- monomer mixture ([A-6] in Table 1) ····· 100 parts

### (Production Example 7)

### < Synthesis of Thermoplastic Resin Liquid [A-7 Liquid] >

Thermoplastic Resin Liquid [A-7 Liquid] (acryl-based resin emulsions having a solid fraction of 50%) was obtained in the same manner as in Production Example 6, except that [A-6], as a monomer mixture, shown in Table 1 was changed to [A-7] in Table 1.

A glass transition temperature (Tg) of the resulting thermoplastic resins, which was determined by calculation, is shown in Table 1.

### (Production Example 8)

### < Synthesis of Thermoplastic Resin Liquid [A-8 Liquid] >

Deionized water (80 parts) was poured into a reaction vessel equipped with a stirring device, heated to 70°C, and the inside of the reaction vessel was purged with nitrogen.

Next, a mixture containing the following composition was prepared, emulsified by a homogenizer, and then added dropwise into the deionized water from a dropping tube in 2 hours. After completion of the dropping, the reaction product was further reacted at 70°C for 3 hours to thereby obtain Thermoplastic Resin Liquid [A-8 Liquid] (acryl-based resin emulsion having a solid fraction of 50%).

A glass transition temperature (Tg) of the resulting thermoplastic resin, which was determined by calculation, is shown in Table 1.
- deionized water ····· 40 parts
- nonreactive emulsifier (ELEMINOL ES-70 produced by Sanyo Chemical Industries, Ltd.) ····· 2.5 parts
- potassium persulfate ····· 0.5 parts
- monomer mixture {[A-8] in Table 1) ····· 100 parts

**Table 1**

| Monomer mixture | | A-1 | A-2 | A-3 | A-4 | A-5 | A-6 | A-7 | A-8 |
|---|---|---|---|---|---|---|---|---|---|
| Monomer composition ratio (part by mass) | n-butyl acrylate | - | - | 40 | 40 | 50 | - | 40 | - |
| | 2-ethylhexyl acrylate | 94 | 66 | - | - | - | 36 | - | 94 |
| | ethyl methacrylate | - | - | 40 | 39 | - | - | - | - |
| | methyl methacrylate | - | - | - | - | - | 44 | 40 | - |
| | acrylonitrile | 3 | 32 | - | - | 50 | - | - | 5 |
| | acrylic add | 2 | 2 | 5 | 6 | - | - | 10 | 2 |
| | vinyl acetate | 1 | - | - | - | - | - | - | 1 |
| | styrene | - | - | 15 | 15 | - | 20 | 10 | - |
| Copolymer Tg(°C) | | -65 | -30 | -21 | -20 | +5 | +14.9 | -20 | -65 |

### (Production Example 9)

### < Preparation of Thermoplastic Resin Liquid [A-9 Liquid] >

A thermoplastic resin emulsion (resin primarily containing an acrylic acid-2-ethylhexyl resin, which was obtained by emulsion polymerization using a nonreactive emulsifier produced by Showa High Polymer Co., Ltd., AP5570, solid fraction: 50%, glass transition temperature (Tg): -65°C) was prepared.

### (Production Example 10)

### < Preparation of Solid Plasticizer Dispersion Liquid [B-1] >

A mixture containing the following composition was dispersed with a sand mill so as to have a volume average particle diameter of 1.0 µm, and thereby Solid Plasticizer Dispersion Liquid [B-1] was prepared.
- diethyl[[3,5-bis(1,1-dimethylethyl)-4-hydroxyphenyl]methyl] phosphonate (trade name, PRONOX1222, produced by Everlight Chemical Industrial Corporation) ····· 30 parts
- 10% aqueous solution of a vinyl alcohol-sodium allyl sulfonate copolymer (trade name: L-3266, produced by Nippon Synthetic Chemical Industry Co., Ltd., average molecular weight: 15,000, degree of saponification: 88%) ····· 15 parts
- alkyl-allyl sulfonate (trade name: NEWCOL-290M, produced by Nippon Nyukazai Co., Ltd.) ····· 0.15 parts
- water ····· 54.85 parts

### (Production Example 11)

### < Preparation of Solid Plasticizer Dispersion Liquid [B-2] >

A mixture containing the following composition was dispersed with a sand mill so as to have a volume average particle diameter of 1.0 µm, and thereby Solid Plasticizer Dispersion Liquid [B-2] was prepared.
- dichyclohexyl phthalate ····· 30 parts
- 10% aqueous solution of a vinyl alcohol-sodium allyl sulfonate copolymer (trade name: L-3266, produced by Nippon Synthetic Chemical Industry Co., Ltd., average molecular weight: 15,000, degree of saponification: 88%) ····· 15 parts
- alkyl-allyl sulfonate (trade name: NEWCOL-290M, produced by Nippon Nyukazai Co., Ltd.) ····· 0.15 parts
- water ····· 54.85 parts

### (Production Example 12)

### < Preparation of Solid Plasticizer Dispersion Liquid [B-3] >

A mixture containing the following composition was dispersed with a sand mill so as to have a volume average particle diameter of 1.0 µm, and thereby Solid Plasticizer Dispersion Liquid [B-3] was prepared.
- triphenyl phosphine (trade name: TPP, produced by Hokko Chemical Industry Co., Ltd ····· 30 parts
- 10% aqueous solution of a vinyl alcohol-sodium allyl sulfonate copolymer (trade name: L-3266, produced by Nippon Synthetic Chemical Industry Co., Ltd., average molecular weight: 15,000, degree of saponification: 88%) ····· 15 parts
- alkyl-allyl sulfonate (surfactant) ····· 0.15 parts
- water ····· 54.85 parts

### (Production Example 13)

### < Preparation of Solid Plasticizer Dispersion Liquid [B-4] >

A mixture containing the following composition was dispersed with a sand mill so as to have a volume average particle diameter of 1.0 µm, and thereby Solid Plasticizer Dispersion Liquid [B-4] was prepared.
- 2-(2'-hydroxy-3'-t-butyl-5'-methylphenyl)-5-chlorobenzotriazole (trade name: EVESORB73, produced by Everlight Chemical Industrial Corporation) ····· 30 parts
- 10% aqueous solution of a vinyl alcohol-sodium allyl sulfonate copolymer (trade name: L-3266, produced by Nippon Synthetic Chemical Industry Co., Ltd., average molecular weight: 15,000, degree of saponification: 88%) ····· 15 parts
- alkyl-allyl sulfonate (trade name: NEWCOL-290M, produced by Nippon Nyukazai Co., Ltd.) ····· 0.15 parts
- water ····· 54.85 parts

### (Production Example 14)

### < Synthesis of High-Molecular Weight Emulsifier >

In to a four-necked flask equipped with a nitrogen inlet tube, a thermometer, a reflux condenser, and a stirrer, polyoxyethylene phenyl ether-based reactive emulsifier (trade name: AQUARON RN-50, produced by DAI-ICHI KOGYO SEIYAKU CO., LTD.) (25 parts, in terms of solid fraction), styrene (12.5 parts), methyl methacrylate (12.5 parts), methacrylic acid (40 parts), and styrene sulfonic acid soda (10 parts) were charged, further, water (20 parts) was added thereto, and the charged components were made to a transparent and homogenous system. Next, dodecanethiol (1 part), benzoyl peroxide (2 parts), and water (300 parts) were mixed with the system to initiate polymerization. After the mixture system was stirred at 65°C for 2 hours, 28% ammonia water (29 parts) was added thereto, the system was further stirred at 65°C for 6 hours to stop the polymerization, followed by cooling to room temperature, and thereby a high-molecular weight emulsifier dispersion liquid having a nonvolatile fraction of 22.5%, and a mass average molecular weight of 32,000 was obtained.

### (Production Example 15)

### < Preparation of Emulsion-Type Tackifier [C-1] >

Polymerized rosin ester having a softening point of 125°C (tackifier, produced by Arakawa Chemical Industries, Ltd., trade name: PENCEL D-125) (100 parts) was dissolved in toluene (60 parts) at 100°C for about 1 hour, and then cooled to 80°C. Next, the high-molecular weight emulsifier obtained in Production Example 14 (3 parts, in terms of solid fraction), and water (160 parts) were added to the solution, and the mixture was strongly stirred at 75°C for 1 hour to be preliminarily emulsified. The resulting preliminarily emulsified product was further emulsified under a high pressure of 300 kg/cm² by a high-pressure emulsification machine (manufactured by Manton Gaulin Company) to thereby obtain an emulsified product. Next, the emulsified product (200 parts) was charged to a reduced-pressure distillation apparatus and subjected to reduced-pressure distillation for 8 hours under the condition of 50°C and 100 mmHg to thereby prepare Emulsion-Type Tackifier [C-1] having a solid fraction of 50%.

### (Production Example 16)

### < Preparation of Emulsion-Type Tackifier [C-2] >

Emulsion-Type Tackifier [C-2] was prepared in the same manner as in Production Example 15, except that the high-molecular weight emulsifier was changed to a low-molecular weight emulsifier (sodium dodecylbenzene sulfonate trade name: NEOGEN R, produced by KAO Corporation).

### (Production Example 17)

### < Preparation of Hollow Under Layer Coating Liquid [D-1 Liquid] >

- plastic-containing spherical-shaped hollow particle (acrylonitrile/vinylidene chloride/methyl methacrylate copolymer, solid fraction concentration: 41%, average particle diameter: 3.6 µm, hollow rate: 90%) ····· 14.6 parts
- Thermoplastic Resin Liquid [A-1 Liquid] ····· 24.0 parts
- surfactant (DAPRO W-77, produced by Elementis Japan K.K.) ····· 0.1 parts
- water ····· 60.4 parts

A mixture containing the composition described above was stirred and dispersed to prepare Hollow Under Layer Coating Liquid [D-1 Liquid].

### (Production Example 18)

### < Preparation of Adhesive Under Layer Coating Liquid [D-2 Liquid] >

A mixture containing the following composition was stirred to prepare Adhesive Under Layer Coating Liquid [D-2 Liquid].
- Thermoplastic Resin Liquid [A-1 Liquid] ····· 100.0 parts
- surfactant (DAPRO W-77, produced by Elementis Japan K.K.) ····· 0.1 parts

### (Production Example 19)

### < Preparation of Adhesive Under Layer Coating Liquid [D-3 Liquid] >

A mixture containing the following composition was stirred to prepare Adhesive Under Layer Coating Liquid [D-3 Liquid].
- Thermoplastic Resin Liquid [A-1 Liquid] ····· 90.0 parts
- Tackifier Emulsion [C-1 Liquid] ····· 10.0 parts
- surfactant (DAPRO W-77, produced by Elementis Japan K.K.) ····· 0.1 parts

### (Production Example 20)

### < Preparation of Water-Dispersible Heat-Sensitive Adhesive Liquid [E-1 Liquid] >

- Thermoplastic Resin Liquid [A-1 Liquid] ····· 13.0 parts
- Solid Plasticizer Dispersion Liquid [B-1 Liquid] ····· 81.8 parts
- Tackifier Emulsion [C-2 Liquid] ····· 3.2 parts
- water ····· 2.0 parts

A mixture containing the composition described above was stirred to prepare Water-Dispersible Heat-Sensitive Adhesive Liquid [E-1 Liquid].

### (Production Example 21)

### < Preparation of Water-Dispersible Heat-Sensitive Adhesive Liquid [E-2 Liquid] >

Water-Dispersible Heat-Sensitive Adhesive Liquid [E-2 Liquid] was prepared in the same manner as in the preparation of a water-dispersible heat-sensitive adhesive liquid of Production Example 20, except that the thermoplastic resin was changed to [A-2 Liquid].

### (Production Example 22)

### < Preparation of Water-Dispersible Heat-Sensitive Adhesive Liquid [E-3 Liquid] >

Water-Dispersible Heat-Sensitive Adhesive Liquid [E-3 Liquid] was prepared in the same manner as in the preparation of a water-dispersible heat-sensitive adhesive liquid of Production Example 20, except that the thermoplastic resin was changed to [A-3 Liquid].

### (Production Example 23)

### < Preparation of Water-Dispersible Heat-Sensitive Adhesive Liquid [E-4 Liquid] >

- Thermoplastic Resin Liquid [A-1 Liquid] ····· 13.0 parts
- Solid Plasticizer Dispersion Liquid [B-3 Liquid] ····· 49.1 parts
- Solid Plasticizer Dispersion Liquid [B-4 Liquid] ····· 32.7 parts
- Tackifier Emulsion [C-2 Liquid] ····· 3.2 parts
- water ····· 2.0 parts

A mixture containing the composition described above was stirred to prepare Water-Dispersible Heat-Sensitive Adhesive Liquid [E-4 Liquid].

### (Production Example 24)

### < Preparation of Water-Dispersible Heat-Sensitive Adhesive Liquid [E-5 Liquid] >

Water-Dispersible Heat-Sensitive Adhesive Liquid [E-5 Liquid] was prepared in the same manner as in the preparation of a water-dispersible heat-sensitive adhesive liquid of Production Example 20, except that the thermoplastic resin was changed to [A-4 Liquid].

### (Production Example 25)

### < Preparation of Water-Dispersible Heat-Sensitive Adhesive Liquid [E-6 Liquid] >

Water-Dispersible Heat-Sensitive Adhesive Liquid [E-6 Liquid] was prepared in the same manner as in the preparation of a water-dispersible heat-sensitive adhesive liquid of Production Example 20, except that the thermoplastic resin was changed to [A-5 Liquid].

### (Production Example 26)

### < Preparation of Water-Dispersible Heat-Sensitive Adhesive Liquid [E-7 Liquid] >

Water-Dispersible Heat-Sensitive Adhesive Liquid [E-7 Liquid] was prepared in the same manner as in Production Example 20, except that the water-dispersible heat-sensitive adhesive liquid was changed to the following composition.
- Thermoplastic Resin Liquid [A-1 Liquid] ····· 13.0 parts
- Solid Plasticizer Dispersion Liquid [B-1 Liquid] ····· 81.8 parts
- Tackifier Emulsion [C-1 Liquid] ····· 3.2 parts
- water ····· 2.0 parts

### (Production Example 27)

### < Preparation of Water-Dispersible Heat-Sensitive Adhesive Liquid [E-8 Liquid] >

Water-Dispersible Heat-Sensitive Adhesive Liquid [E-8 Liquid] was prepared in the same manner as in Production Example 20, except that the water-dispersible heat-sensitive adhesive liquid was changed to the following composition.
- Thermoplastic Resin Liquid [A-6 Liquid] ····· 13.0 parts
- Solid Plasticizer Dispersion Liquid [B-2 Liquid] ····· 81.8 parts
- Tackifier Emulsion [C-2 Liquid] ····· 3.2 parts
- water ····· 2.0 parts

### (Production Example 28)

### < Preparation of Water-Dispersible Heat-Sensitive Adhesive Liquid [E-9 Liquid] >

Water-Dispersible Heat-Sensitive Adhesive Liquid [E-9 Liquid] was prepared in the same manner as in Production Example 20, except that the water-dispersible heat-sensitive adhesive liquid was changed to the following composition.
- Thermoplastic Resin Liquid [A-7 Liquid] ····· 13.0 parts
- Solid Plasticizer Dispersion Liquid [B-2 Liquid] ····· 81.8 parts
- Tackifier Emulsion [C-2 Liquid] ····· 3.2 parts
- water ····· 2.0 parts

### (Production Example 29)

### < Preparation of Water-Dispersible Heat-Sensitive Adhesive Liquid [E-10 Liquid] >

Water-Dispersible Heat-Sensitive Adhesive Liquid [E-10 Liquid] was prepared in the same manner as in Production Example 20, except that the water-dispersible heat-sensitive adhesive liquid was changed to the following composition.
- Thermoplastic Resin Liquid [A-8 Liquid] ····· 13.0 parts
- Solid Plasticizer Dispersion Liquid [B-1 Liquid] ····· 81.8 parts
- Tackifier Emulsion [C-2 Liquid] ····· 3.2 parts
- water ····· 2.0 parts

### (Production Example 30)

### < Preparation of Water-Dispersible Heat-Sensitive Adhesive Liquid [E-11 Liquid] >

Water-Dispersible Heat-Sensitive Adhesive Liquid [E-11 Liquid] was prepared in the same manner as in Production Example 20, except that the water-dispersible heat-sensitive adhesive liquid was changed to the following composition.
- Thermoplastic Resin Liquid [A-8 Liquid] ····· 13.0 parts
- Solid Plasticizer Dispersion Liquid [B-1 Liquid] ...... 81.8 parts
- Tackifier Emulsion [C-1 Liquid] ...... 3.2 parts
- water ...... 2.0 parts

### (Production Example 31)

### < Preparation of Water-Dispersible Heat-Sensitive Adhesive Liquid [E-12 Liquid] >

Water-Dispersible Heat-Sensitive Adhesive Liquid [E-12 Liquid] was prepared in the same manner as in Production Example 20, except that the water-dispersible heat-sensitive adhesive liquid was changed to the following composition.
- Thermoplastic Resin Liquid [A-9 Liquid] ····· 13.0 parts
- Solid Plasticizer Dispersion Liquid [B-1 Liquid] ····· 81.8 parts
- Tackifier Emulsion [C-2 Liquid] ····· 3.2 parts
- water ····· 2.0 parts

### (Production Example 32)

### < Preparation of Water-Dispersible Heat-Sensitive Adhesive Liquid [E-13 Liquid] >

Water-Dispersible Heat-Sensitive Adhesive Liquid [E-13 Liquid] was prepared in the same manner as in Production Example 20, except that the water-dispersible heat-sensitive adhesive liquid was changed to the following composition.
- Thermoplastic Resin Liquid [A-9 Liquid] ····· 13.0 parts
- Solid Plasticizer Dispersion Liquid [B-1 Liquid] ····· 81.8 parts
- Tackifier Emulsion [C-1 Liquid] ····· 3.2 parts
- water ····· 2.0 parts

### (Production Example 33)

### < Heat-Sensitive Recording Material >

### - Non-Foamable Heat-Insulation Layer-Forming Coating Liquid [F Liquid] -

A mixture containing the following composition was stirred and dispersed to prepare Non-Foamable Heat-Insulation Layer-Forming Coating Liquid [F Liquid].
- micro-fine hollow particle dispersion (a copolymerized resin primarily containing vinylidene chloride-acrylonitrile, solid fraction concentration: 32%, average particle diameter: 3.6 µm, hollow rate: 92%) ····· 30 parts
- styrene-butadiene copolymer latex (glass transition temperature (Tg): 4°C, solid fraction concentration: 48%, produced by Nippon A & L Inc.) ····· 10 parts
- surfactant (DAPRO W-77, produced by Elementis Japan K.K.) ····· 0.1 parts
- water ····· 60 parts

### - Preparation of Color-Former Dispersion Liquid [G Liquid] -

A mixture containing the following composition was dispersed by a sand mill so as to have a volume average particle diameter of about 1.5 µm, and thereby Color-Former Dispersion Liquid [G Liquid] was prepared.
- 3-di-n-butylamino-6-methyl-7-anilinofluoran ····· 20 parts
- polyvinyl alcohol (10% aqueous solution, produced by Nippon Synthetic Chemical Industry Co., Ltd., GOHSELAN L-3266) ····· 10 parts
- water ····· 70 parts

### - Preparation of Color Developing Agent Dispersion Liquid [H Liquid] -

A mixture containing the following composition was dispersed by a sand mill so as to have a volume average particle diameter of about 1,5 µm, and thereby Preparation of Color Developing Agent Dispersion Liquid [H Liquid].
- 4-isopropoxy-4'-hydroxydiphenyl sulfone ····· 10 parts
- polyvinyl alcohol (10% aqueous solution, produced by Nippon Synthetic Chemical Industry Co., Ltd., GOHSELAN L-3266) ····· 25 parts
- calcium carbonate (produced by Shiroishi Kogyo Co, Ltd., CALSHITEC BRIRIANT-15) ····· 15 parts
- water ...... 50 parts

### - Preparation of Heat-Sensitive Recording Layer Coating Liquid [I Liquid]

Next, [G Liquid] and [H Liquid] were mixed and stirred so that a mass ratio of [G Liquid] : [H Liquid] was 1 : 8, and thereby Heat-Sensitive Recording Layer Coating Liquid [I Liquid] was prepared.

Next, [F Liquid] prepared as above was applied to a surface of base paper having an average basis weight of 80 g/m² so as to have a dried mass of 4 g/m², and then dried to provide a non-foamable heat-insulation layer on the base paper. Onto the non-foamable heat-insulation layer, [I Liquid] prepared as above was applied so as to have a dried mass of 5 g/m², and then dried to provide a heat-sensitive recording layer. Next, the resulting laminate was super-calendered so that the degree of OKEN smoothness was 2,000 sec., and thereby a heat-sensitive recording layer-applied paper.

### [Preparation of Protective Layer Coating Liquid]

### - Preparation of Protective Layer Primary Dispersion Liquid -

A mixture containing the following composition was crushed by a vertical sand mill so as to have a volume average particle diameter of 1 µm or smaller, and dispersed to prepare a protective layer primary dispersion liquid.
- aluminum hydroxide (produced by Showa Denko K.K., H-42M) ····· 20 parts
- polyvinyl alcohol (10% aqueous solution, produced by Nippon Synthetic Chemical Industry Co., Ltd., GOHSELAN L-3266) ····· 20 parts
- water ····· 40 parts

Next, a mixture containing the following composition was mixed and dispersed to prepare a protective layer coating liquid.
- protective layer primary dispersion liquid ····· 10 parts
- polyvinyl alcohol (10% aqueous solution, produced by Nippon Synthetic Chemical Industry Co., Ltd., GOHSELAN L-3266) ····· 20 parts
- epichlorohydrin (12.5% aqueous solution) ····· 5 parts
- 30% dispersion liquid of zinc stearate ····· 2 parts

### - Preparation of Heat-Sensitive Recording Paper -

Next, the protective layer coating liquid was applied onto the heat-sensitive recording layer-applied paper so that the amount of dry coating was 3.0 g/m², and then dried. Thereafter, the resulting product was super-calendered so that the degree of OKEN smoothness was 2,000 sec., and thereby a heat-sensitive recording paper was produced.

### (Example 1)

On a surface of the heat-sensitive recording paper produced in Production Example 33 on which the heat-sensitive recording layer was not provided, Hollow Under Layer Coating Liquid [D-1 Liquid] was applied so as to have a dried mass of 4 g/m², and then dried, thereby forming an intermediate layer. Next, onto the intermediate layer, Water-Dispersible Heat-Sensitive Adhesive Liquid [E-1 Liquid] was applied so as to have a died mass of 15 g/m², and then dried, thereby producing a heat-sensitive adhesive material of Example 1.

### (Example 2)

A heat-sensitive adhesive material of Example 2 was produced in the same manner as in Example 1, except that Water-Dispersible Heat-Sensitive Adhesive Liquid [E-1 Liquid] was changed to [E-2 Liquid].

### (Example 3)

A heat-sensitive adhesive material of Example 3 was produced in the same manner as in Example 1, except that Water-Dispersible Heat-Sensitive Adhesive Liquid [E-1 Liquid] was changed to [E-3 Liquid].

### (Example 4)

A heat-sensitive adhesive material of Example 4 was produced in the same manner as in Example 1, except that Water-Dispersible Heat-Sensitive Adhesive Liquid [E-1 Liquid] was changed to [E-4 Liquid].

### (Example 5)

A heat-sensitive adhesive material of Example 5 was produced in the same manner as in Example 1, except that Water-Dispersible Heat-Sensitive Adhesive Liquid [E-1 Liquid] was changed to [E-7 Liquid].

### (Example 6)

On a surface of the heat-sensitive recording paper produced in Production Example 33 on which the heat-sensitive recording layer was not provided, Adhesive Under Layer Coating Liquid [D-2 Liquid] was applied so that the adhesion amount was 20 g/m², subsequently, Hollow Under Layer Coating Liquid [D-1 Liquid] was applied so that the adhesion amount was 2 g/m², and then dried, thereby forming an adhesive under layer and a hollow under layer on the heat-sensitive recording paper. Next, onto the hollow under layer, Water-Dispersible Heat-Sensitive Adhesive Liquid [E-7 Liquid] was applied so as to have a died mass of 15 g/m², and then dried, thereby producing a heat-sensitive adhesive material of Example 6.

### (Example 7)

A heat-sensitive adhesive material of Example 7 was produced in the same manner as in Example 6, except that on a surface of the heat-sensitive recording paper produced in Production Example 33 on which the heat-sensitive recording layer was not provided, Adhesive Under Layer Coating Liquid [D-3 Liquid] was applied so that the adhesion amount was 20 g/m², subsequently, Hollow Under Layer Coating Liquid [D-1 Liquid] was applied so that the adhesion amount was 2 g/m²,and then dried, thereby forming an adhesive under layer and a hollow under layer.

### (Comparative Example 1)

A heat-sensitive adhesive material of Comparative Example 1 was produced in the same manner as in Example 1, except that Water-Dispersible Heat-Sensitive Adhesive Liquid [E-1 Liquid] was changed to [E-5 Liquid].

### (Comparative Example 2)

A heat-sensitive adhesive material of Comparative Example 2 was produced in the same manner as in Example 1, except that Water-Dispersible Heat-Sensitive Adhesive Liquid [E-1 Liquid] was changed to [E-6 Liquid].

### (Comparative Example 3)

On a surface of the heat-sensitive recording paper produced in Production Example 33 on which the heat-sensitive recording layer was not provided, Water-Dispersible Heat-Sensitive Adhesive Liquid [E-8 Liquid] was applied so as to have a dried mass of 15 g/m², and then dried, thereby producing a heat-sensitive adhesive material of Comparative Example 3.

### (Comparative Example 4)

A heat-sensitive adhesive material of Comparative Example 4 was produced in the same manner as in Example 1, except that Water-Dispersible Heat-Sensitive Adhesive Liquid [E-1 Liquid] was changed to [E-8 Liquid].

### (Comparative Example 5)

A heat-sensitive adhesive material of Comparative Example 5 was produced in the same manner as in Example 1, except that Water-Dispersible Heat-Sensitive Adhesive Liquid [E-1 Liquid] was changed to [E-9 Liquid].

### (Comparative Example 6)

A heat-sensitive adhesive material of Comparative Example 6 was produced in the same manner as in Example 1, except that Water-Dispersible Heat-Sensitive Adhesive Liquid [E-1 Liquid] was changed to [E-10 Liquid].

### (Comparative Example 7)

A heat-sensitive adhesive material of Comparative Example 7 was produced in the same manner as in Example 1, except that Water-Dispersible Heat-Sensitive Adhesive Liquid [E-1 Liquid] was changed to [E-11 Liquid].

### (Comparative Example 8)

A heat-sensitive adhesive material of Comparative Example 8 was produced in the same manner as in Example 1, except that Water-Dispersible Heat-Sensitive Adhesive Liquid [E-1 Liquid] was changed to [E-12 Liquid].

### (Comparative Example 9)

A heat-sensitive adhesive material of Comparative Example 9 was produced in the same manner as in Example 1, except that Water-Dispersible Heat-Sensitive Adhesive Liquid [E-1 Liquid] was changed to [E-13 Liquid].

The compositions of the heat-sensitive adhesive materials obtained in Examples and Comparative Examples described above are shown in Table 3-1A and 3-1B described below.

Further, the heat-sensitive adhesive materials obtained in Examples and Comparative Examples described above were evaluated according to the following methods.

### < Blocking Test Method >

A surface of each of the resultant heat-sensitive adhesive materials on which a heat-sensitive adhesive layer was provided was brought into contact with the opposite surface (the heat-sensitive recording layer) thereof, and a pressure of 200 g/cm² was applied and left standing at 60°C under dry condition for 4 days. Thereafter, the heat-sensitive adhesive material was left standing at room temperature, and then the sample was peeled off. The blocking resistance of the heat-sensitive adhesive material at that time was evaluated based on the criteria shown in Table 2. The evaluation results are shown in Table 3-2. Note that in the present invention, the grade 7 or higher is on the practically usable level.

**Table 2**

| Evaluation | Grade | Abrasion | Peeling-off sound | Dot-like transfer | Peeled-off portion |
|---|---|---|---|---|---|
| A | 10 | Self-weight | | | |
| | 9 | Slightly observed | Not heard | | |
| B | 8 | Observed | Slightly heard | | |
| | 7 | | Heard | | |
| C | 6 | | | Observed in some portions | |
| | 5 | | | Observed in range of 30% to 50% | |
| | 4 | | | Observed in range of 50% to the whole area | |
| | 3 | | | | Observed in some portions |
| | 2 | | | | Observed in range of 30% to 50% |
| | 1 | | | | Observed in range of 50% to the whole area |

### < Adhesive Strength >

### (1) Activation Method

Each of the heat-sensitive adhesive materials produced in Examples and Comparative Examples was cut into a size of width 5 cm x length 15 cm, and a surface of the heat-sensitive adhesive material provided with the heat-sensitive adhesive layer was brought into contact with a thermal head (manufactured by TEC Co., TH-0976SP: 8 dot/mm) and thermally activated through conducting all dots under the following conditions: resistance: 500 Ω, activation energy: 28.8 mJ/mm², printing speed: 100 mm/sec., and pressure applied by a silicon-based platen having a diameter of 1 cm: 6 kgf/line. Then, the thermally activated heat-sensitive adhesive material was affixed to an adherend, and measurement evaluations were conducted in an environment of 22°C and 65% RH.

### (2) Measurement of Adhesive Strength

The heat-sensitive adhesive material label which had been thermally activated according to the method described above was affixed, at its thermally activated surface, to a corrugated cardboard (C-LinerA Flute) in the longitudinal direction of the heat-sensitive adhesive material under application of pressure of 4 kg, with a rubber roller. One day later, the heat-sensitive adhesive material was peeled off from the corrugated cardboard at a peeling angle of 180° and a peeling speed of 300 mm/min. The heat strength of the heat-sensitive adhesive material at that time was measured with a force gauge (MODEL DPS-5, manufactured by IMADA Co.), measurement data was read at intervals of 0.1 sec., and the measured values were averaged. The measurement results are shown in Table 3-2. The unit of the average value is N/50 mm.

Note that the grades of adhesive strength were determined based on the following criteria:
A: 15 N/50 mm or higher
B: 10 N/50 mm or higher but lower than 15 N/50 mm
C: 5 N/50 mm or higher but lower than 10 N/50 mm
D: lower than 5 N/50 mm

### < Smear on Platen Roll >

Each of the heat-sensitive adhesive materials produced was cut into a size of width 5 cm x length 15 cm, and a surface of the heat-sensitive adhesive material provided with the heat-sensitive adhesive layer was brought into contact with a thermal head (manufactured by TEC Co., TH-0976SP: 8 dot/mm) and thermally activated through conducting all dots, in an environment of 35°C and 80% RH, under the following conditions: resistance: 500 Ω, activation energy: 28.8 mJ/mm², printing speed: 100 mm/sec., and pressure applied by a silicon-based platen having a diameter of 1 cm: 6 kgf/line. After 100 sheets, 600 sheets and 1,200 sheets were continuously output, smear on the platen roll was evaluated based on the following criteria. The evaluation results are shown in Table 3-2.
A: No smear was observed on the platen roll.
B: After the continuous output, smear was observed in some portions of the platen roll.
C: Smear was observed throughout the platen roll due to the continuous output. Paper jamming occurred.

**Table 3-1A**

| | Composition | | | | | | |
|---|---|---|---|---|---|---|---|
| | Heat-sensitive adhesive layer | | | | | Under layer | |
| | Solid plasticizer | Thermoplastic resin | | Tackifier | Coating liquid | Hollow under layer | Adhesive under layer |
| | | Emulsifier | Tg (°C) | Type of emulsifier | | Resin emulsifier | Resin emulsifier |
| Ex.1 | PRONOX 1222 | reactive emulsifier (A-1 resin) | -65 | low-molecular weight (C-2 Liquid) | E-1 | hollow/reactive emulsifier resin (D-1 Liquid) | Not added |
| Ex. 2 | PRONOX 1222 | reactive emulsifier (A-2 resin) | -30 | low-molecular weight (C-2 Liquid) | E-2 | hollow/reactive emulsifier resin (D-1 Liquid) | Not added |
| Ex. 3 | PRONOX 1222 | reactive emulsifier (A-3 resin) | -21 | low-molecular weight (C-2 Liquid) | E-3 | hollow/reactive emulsifier resin (D-1 Liquid) | Not added |
| Ex. 4 | TPP/ EVERSORB73 | reactive emulsifier (A-1 resin) | -65 | low-molecular weight (C-2 Liquid) | E-4 | hollow/reactive emulsifier resin (D-1 Liquid) | Not added |
| Ex. 5 | PRONOX 1222 | reactive emulsifier (A-1 resin) | -65 | high-molecular weight (C-1 Liquid) | E-7 | hollow/reactive emulsifier resin (D-1 Liquid) | Not added |
| Ex. 6 | PRONOX 1222 | reactive emulsifier (A-1 resin) | -65 | high-molecular weight (C-1 Liquid) | E-7 | hollow/reactive emulsifier resin (D-1 Liquid) | reactive emulsifier resin (D-2 Liquid) |
| Ex 7 | PRONOX 1222 | reactive emulsifier (A-1 resin) | -65 | high-molecular weight (C-1 Liquid) | E-7 | hollow/reactive emulsifier resin (D-1 Liquid) | reactive emulsifier resin + tackifier (D-3 Liquid) |

**Table 3-1B**

| | Composition | | | | | | |
|---|---|---|---|---|---|---|---|
| | Heat-sensitive adhesive layer | | | | | Under layer | |
| | Solid plasticizer | Thermoplastic resin | | Tackifier | Coaling liquid | Hollow under layer | Adhesive under layer |
| | | Emulsifier | Tg (°C) | Type of emulsifier | | Resin emulsifier | Resin emulsifier |
| Comp. Ex.1 | PRONOX 1222 | reactive emulsifier (A-4 resin) | -20 | low-molecular weight (C-2 Liquid) | E-5 | hollow/reactive emulsifier resin (D-1 Liquid) | Not added |
| Comp. Ex. 2 | PRONOX 1222 | reactive emulsifier (A-5 resin) | 5 | low-molecular weight (C-2 Liquid) | E-6 | hollow/reactive emulsifier resin (D-1 Liquid) | Not added |
| Comp. Ex. 3 | dichyclohexyl phthalate | reactive emulsifier (A-6 resin) | 14.9 | low-molecular weight (C-2 Liquid) | E-8 | Not added | Not added |
| Comp. Ex. 4 | dichyclohexyl phthalate | reactive emulsifier (A-6 resin) | 14.9 | low-molecular weight (C-2 Liquid) | E-8 | hollow/reactive emulsifier resin (D-1 Liquid) | Not added |
| Comp. Ex. 5 | dichyclohexyl phthalate | reactive emulsifier (A-7 resin) | -20 | low-molecular weight (C-2 Liquid) | E-9 | hollow/reactive emulsifier resin (D-1 Liquid) | Not added |
| Comp. Ex. 6 | PRONOX 1222 | nonreactive emulsifier (A-8 resin) | -65 | low-molecular weight (C-2 Liquid) | E-10 | hollow/reactive emulsifier resin (D-1 Liquid) | Not added |
| Comp. Ex. 7 | PRONOX 1222 | nonreactive emulsifier (A-8 resin) | -65 | high-molecular weight (C-1 Liquid) | E-11 | hollow/reactive emulsifier resin (D-1 Liquid) | Not added |
| Comp. Ex. 8 | PRONOX 1222 | AP5570 produced by Showa High Polymer Co.. Ltd. (A-9 resin) | -65 | low-molecular weight (C-2 Liquid) | E-12 | hollow/reactive emulsifier resin (D-1 Liquid) | Not added |
| Comp. Ex. 9 | PRONOX 1222 | AP5570 produced by Showa High Polymer Co., Ltd. (A-9 resin) | -65 | high-molecular weight (C-1 Liquid) | E-13 | hollow/reactive emulsifier resin (D-1 Liquid) | Not added |

**Table 3-2**

| | Quality | | | | | | |
|---|---|---|---|---|---|---|---|
| | Adhesive strength to corrugated cardboard (N/50 mm) | | Blocking | | Printer matching - Smear on platen under 35°C/80% RH condition | | |
| | 22OC/65% RH | | 60°C for 4 days | | after output of 100 sheets | after output of 600 sheets | after output of 1,200 sheets |
| Ex.1 | 13.5 | B | 8 | B | A | B | B |
| Ex.2 | 12.2 | B | 8 | B | A | B | B |
| Ex.3 | 10.8 | B | 8 | B | A | B | B |
| Ex.4 | 11.5 | B | 8 | B | A | B | B |
| Ex.5 | 13.7 | B | 10 | A | A | A | A |
| Ex.6 | 15.5 | A | 9 | A | A | A | A |
| Ex.7 | 24.3 | A | 9 | A | A | A | A |
| Comp. Ex.1 | 9.7 | C | 9 | A | A | B | B |
| Comp. Ex.2 | 6.5 | C | 9 | A | A | B | B |
| Comp. Ex.3 | 2.1 | D | 3 | C | A | B | B |
| Comp. Ex.4 | 5.7 | C | 3 | C | A | B | B |
| Comp. Ex. 5 | 6.4 | C | 1 | C | A | B | B |
| Comp. Ex. 6 | 14.6 | B | 7 | B | D (7 sheets jammed) | - | - |
| Comp. Ex.7 | 13.9 | B | 8 | B | D (15 sheets jammed) | - | - |
| Comp. Ex.8 | 14.8 | B | 7 | B | D (5 sheets jammed) | - | - |
| Comp. Ex. 9 | 14.0 | B | 8 | B | D (9 sheets jammed) | - | - |

The heat-sensitive adhesive material of the present invention can simultaneously satisfy both an improvement of adhesive strength to a rough-surfaced adherend such as corrugated cardboard and an improvement of blocking resistance, in thermal activation of a thermal head and is excellent in printer conveyance in high-temperature and high-humidity environments, and thus it can be favorably used for label adhesive sheets and the like.

## Claims

1. A heat-sensitive adhesive material comprising:
a support, and
a heat-sensitive adhesive layer on the support, the heat-sensitive adhesive layer comprises a water-dispersible heat-sensitive adhesive containing at least a thermoplastic resin, a solid plasticizer and a tackifier,
wherein the thermoplastic resin is obtained by emulsion polymerization using a reactive surfactant and has a glass transition temperature (Tg) of lower than -20°C.

2. The heat-sensitive adhesive material according to claim 1, wherein the thermoplastic resin is an acryl-based resin.

3. The heat-sensitive adhesive material according to one of claims 1 and 2, wherein the tackifier is obtained by being emulsified in the presence of a high-molecular weight emulsifier.

4. The heat-sensitive adhesive material according to any one of claims 1 to 3, wherein the solid plasticizer is a compound represented by any one of General Formula (1), Structural Formulae (2) and (3) below: 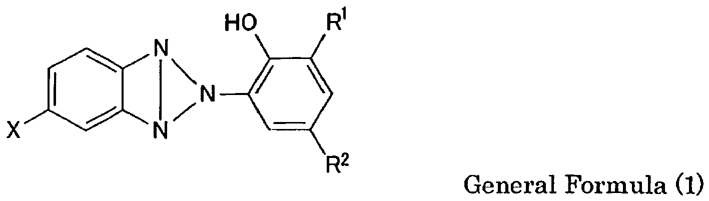 where R¹ and R² may be identical to or different from each other, and each represent any one of a hydrogen atom, an alkyl group, and α,α-dimethylbenzyl group; and X represents a hydrogen atom or a halogen atom.

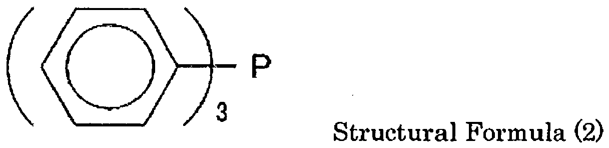

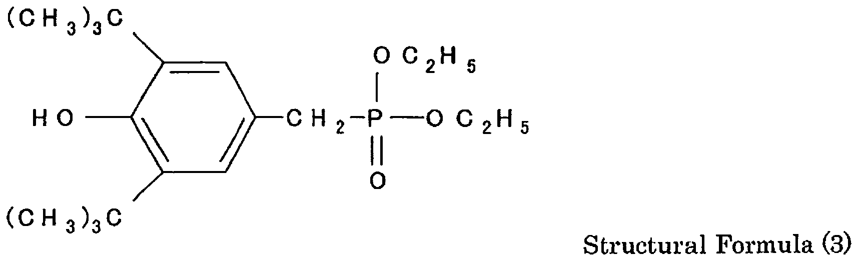

5. The heat-sensitive adhesive material according to any one of claims 1 to 4, further comprising an under layer between the heat-sensitive adhesive layer and the support.

6. The heat-sensitive adhesive material according to claim 5, wherein the under layer is a hollow under layer formed of a thermoplastic resin which is obtained by emulsion polymerization using hollow particles and a reactive surfactant.

7. The heat-sensitive adhesive material according to claim 5, wherein the under layer comprises an adhesive under layer formed of a thermoplastic resin which is obtained by emulsion polymerization using a reactive surfactant, and a hollow under layer formed of a thermoplastic resin which is obtained by emulsion polymerization using hollow particles and a reactive surfactant.

8. The heat-sensitive adhesive material according to claim 5, wherein the under layer comprises an adhesive under layer formed of the thermoplastic resin which is obtained by emulsion polymerization using a reactive surfactant and a tackifier, and a hollow under layer formed of a thermoplastic resin which is obtained by emulsion polymerization using hollow particles and a reactive surfactant.

9. The heat-sensitive adhesive material according to any one of claims 1 to 8, wherein the heat-sensitive adhesive material exhibits surface tackiness by heating with a line-type thermal head.

10. The heat-sensitive adhesive material according to any one of claims 1 to 9, further comprising a recording layer on an opposite surface of the support to a surface thereof provided with the heat-sensitive adhesive layer.

## Patentansprüche

1. Wärmeempfindliches Klebstoffmaterial umfassend:
einen Träger und
eine wärmeempfindliche Klebstoffschicht auf dem Träger, wobei die wärmeempfindliche Klebstoffschicht in Wasser dispergierbaren, wärmeempfindlichen Klebstoff umfasst, der mindestens ein Thermoplastharz, einen festen Weichmacher und einen Klebrigmacher enthält;
wobei das Thermoplastharz durch Emulsionspolymerisation unter Anwendung eines reaktionsfähigen Tendsids erhalten wird und eine Glasübergangstemperatur (Tg) von weniger als -20 °C aufweist.

2. Wärmeempfindliches Klebstoffmaterial nach Anspruch 1, wobei das Thermoplastharz ein Harz auf Acrylbasis ist.

3. Wärmeempfindliches Klebstoffmaterial nach einem der Ansprüche 1 und 2, wobei der Klebrigmacher dadurch erhalten wird, dass er in Gegenwart eines hochmolekularen Emulgiermittels emulgiert wird.

4. Wärmeempfindliches Klebstoffmaterial nach einem der Ansprüche 1 bis 3, wobei der feste Weichmacher eine Verbindung ist, die durch irgendeine von der allgemeinen Formel (1), den strukturellen Formeln (2) und (3) unten: 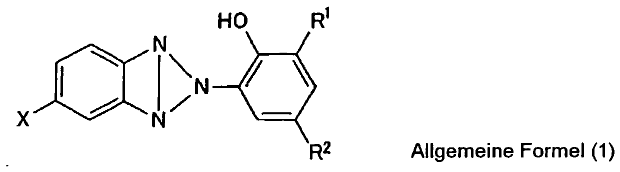 dargestellt ist, wobei R¹ und R² identisch oder verschieden von einander sein können und jedes irgendeines von einem Wasserstoffatom, einer Alkylgruppe und α,α-Dimethylbenzylgruppe sein kann; und X ein Wasserstoffatom oder ein Halogenatom darstellt

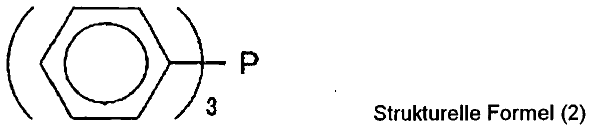

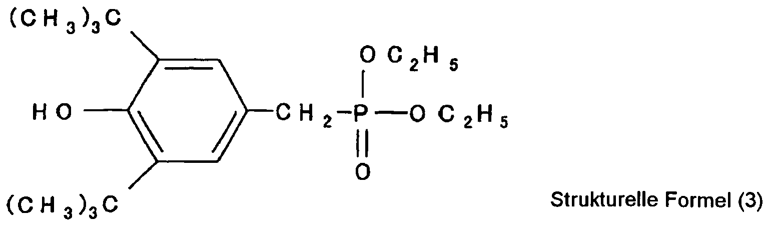

5. Wärmeempfindliches Klebstoffmaterial nach einem der Ansprüche 1 bis 4, des Weiteren eine Unterschicht zwischen der wärmeempfindlichen Klebstoffschicht und dem Träger umfassend.

6. Wärmeempfindliches Klebstoffmaterial nach Anspruch 5, wobei die Unterschicht eine hohle Unterschicht ist, die aus einem Thermoplastharz gebildet wird, das durch Emulsionspolymerisation unter Anwendung hohler Teilchen und eines reaktionsfähigen Tensids erhalten wird.

7. Wärmeempfindliches Klebstoffmaterial nach Anspruch 5, wobei die Unterschicht eine Klebstoffunterschicht, die aus einem Thermoplastharz gebildet ist, das durch Emulsionspolymerisation unter Anwendung eines reaktionsfähigen Tensids erhalten wird, und eine hohle Unterschicht, die aus einem Thermoplastharz gebildet ist, das durch Emulsionspolymerisation unter Anwendung hohler Teilchen und eines reaktionsfähigen Tensids erhalten wird, umfasst.

8. Wärmeempfindliches Klebstoffmaterial nach Anspruch 5, wobei die Unterschicht eine Klebstoffunterschicht, die aus dem Thermoplastharz gebildet ist, das durch Emulsionspolymerisation unter Anwendung eines reaktionsfähigen Tensids und eines Klebrigmachers erhalten wird, und eine hohle Unterschicht, die aus einem Thermoplastharz gebildet ist, das durch Emulsionspolymerisation unter Anwendung hohler Teilchen und eines reaktionsfähigen Tensids erhalten wird, umfasst.

9. Wärmeempfindliches Klebstoffmaterial nach einem der Ansprüche 1 bis 8, wobei das wärmeempfindliche Klebstofmaterial durch Erwärmen mit einem thermischen Kopf von Linientyp Oberflächenklebrigkeit aufweist.

10. Wärmeempfindliches Klebstoffmaterial nach einem der Ansprüche 1 bis 9, des Weiteren eine Aufzeichnungsschicht auf einer entgegengesetzten Oberfläche des Trägers zu einer Oberfläche davon umfasst, die mit der wärmeempfindlichen Klebstoffschicht versehen ist.

## Revendications

1. Matériau adhésif sensible à la chaleur comprenant:
un support, et
une couche adhésive sensible à la chaleur sur le support, la couche adhésive sensible à la chaleur comprend un adhésif dispersible dans l'eau sensible à la chaleur contenant au moins une résine thermoplastique, un plastifiant solide et un agent donnant du collant,
dans lequel la résine thermoplastique est obtenue par polymérisation en émulsion en utilisant un tensioactif réactif et a une température de transition vitreuse (Tg) inférieure à -20° C.

2. Matériau adhésif sensible à la chaleur selon la revendication 1, dans lequel la résine thermoplastique est une résine à base acrylique.

3. Matériau adhésif sensible à la chaleur selon l'une quelconque des revendications 1 et 2, dans lequel l'agent donnant du collant est obtenu en étant émulsifié en présence d'un émulsifiant de poids moléculaire élevé.

4. Matériau adhésif sensible à la chaleur selon l'une quelconque des revendications 1 à 3, dans lequel le plastifiant solide est un composé représenté par l'une quelconque parmi la formule générale (1), les formules structurelles (2) et (3) ci-dessous: 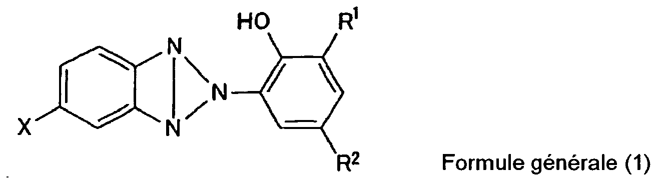 où R¹ et R² peuvent être identiques ou différents l'un de l'autre, et chacun représente l'un quelconque parmi un atome d'hydrogène, un groupe alkyle et un groupe α,α-diméthyl benzyle ; et X représente un atome d'hydrogène ou un atome d'halogène.

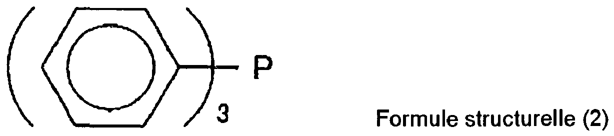

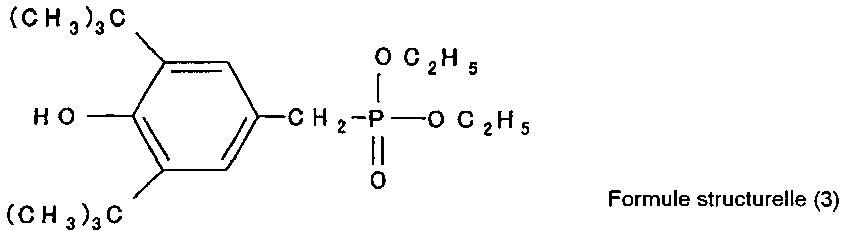

5. Matériau adhésif sensible à la chaleur selon l'une quelconque des revendications 1 à 4, comprenant en outre une sous-couche entre la couche adhésive sensible à la chaleur et le support.

6. Matériau adhésif sensible à la chaleur selon la revendication 5, dans lequel la sous-couche est une sous-couche creuse formée d'une résine thermoplastique qui est obtenue par polymérisation en émulsion utilisant des particules creuses et un tensioactif réactif.

7. Matériau adhésif sensible à la chaleur selon la revendication 5, dans lequel la sous-couche comprend une sous-couche adhésive formée d'une résine thermoplastique qui est obtenue par polymérisation en émulsion utilisant un tensioactif réactif, et une sous-couche creuse formée d'une résine thermoplastique qui est obtenue par polymérisation en émulsion utilisant des particules creuses et un tensioactif réactif.

8. Matériau adhésif sensible à la chaleur selon la revendication 5, dans lequel la sous-couche comprend une sous-couche adhésive formée de la résine thermoplastique qui est obtenue par polymérisation en émulsion utilisant un tensioactif réactif et un agent donnant du collant ; et une sous-couche creuse formée d'une résine thermoplastique qui est obtenue par polymérisation en émulsion utilisant des particules creuses et un tensioactif réactif.

9. Matériau adhésif sensible à la chaleur selon l'une quelconque des revendications 1 à 8, dans lequel le matériau adhésif sensible à la chaleur fait preuve de collant de surface par chauffage avec une tête thermique de type en ligne.

10. Matériau adhésif sensible à la chaleur selon l'une quelconque des revendications 1 à 9, comprenant en outre une couche d'enregistrement sur une surface du support opposée à une surface de celui-ci présentant la couche adhésive sensible à la chaleur.
